# EUROPÄISCHE PATENTSCHRIFT

(11) **EP 3 283 563 B1**
(45) Veröffentlichungstag und Bekanntmachung des Hinweises auf die Patenterteilung: **01.12.2021**
(21) Anmeldenummer: 16714399.9
(22) Anmeldetag: 04.04.2016
(51) Int. Cl.: C08K 5/5313, C08K 5/5317, C08K 5/5399, C09K 21/12, C08K 5/00

(54) **FLAMMHEMMENDE POLYAMIDZUSAMMENSETZUNG**
FLAME-RETARDANT POLYAMIDE COMPOSITION
COMPOSITION DE POLYAMIDE IGNIFUGE

(30) Priorität: 13.04.2015 DE 102015004661
(43) Veröffentlichungstag der Anmeldung: 21.02.2018
(73) Patentinhaber: Clariant International Ltd, 4132 Muttenz (CH)
(72) Erfinder: HÖROLD, Sebastian, 86420 Diedorf (DE); SCHLOSSER, Elke, 86163 Augsburg (DE)
(74) Vertreter: Jacobi, Carola
(86) Internationale Anmeldenummer: PCT/EP2016/057310
(87) Internationale Veröffentlichungsnummer: WO 2016/165964

(56) Entgegenhaltungen:
- WO-A1-2012/055532
- WO-A1-2014/135256
- US-A1- 2010 261 818
- DATABASE WPI Week 201012 Thomson Scientific, London, GB; AN 2010-B33918 XP002758678, -& JP 2010 024324 A (MITSUBISHI ENG PLASTICS KK) 4. Februar 2010 (2010-02-04)

## Beschreibung

Die vorliegende Erfindung betrifft eine flammhemmende Polyamidzusammensetzung sowie Formkörper, die diese flammhemmende Polyamidzusammensetzung enthalten.

Aufgrund ihrer chemischen Zusammensetzung sind viele Kunststoffe leicht brennbar. Um die von Kunststoffverarbeitern und teilweise vom Gesetzgeber geforderten hohen Flammschutzanforderungen erreichen zu können, müssen Kunststoffe in der Regel mit Flammschutzmitteln ausgerüstet werden. Hierzu sind eine Vielzahl unterschiedlicher Flammschutzmittel und Flammschutzmittelsynergisten bekannt und auch kommerziell erhältlich. Aufgrund der vorteilhafteren Brandnebenerscheinungen bezüglich Rauchgasdichte und Rauchgaszusammensetzung sowie aus ökologischen Gründen werden nichthalogenierte Flammschutzmittelsysteme seit einiger Zeit bevorzugt eingesetzt.

Unter den nicht-halogenierten Flammschutzmitteln haben sich insbesondere für thermoplastische Polymere die Salze von Phosphinsäuren (Phosphinate) als besonders wirksam erwiesen (DE-A-2252258 und DE-A-2447727. Dabei werden einige Derivate dieser Flammschutzmittelklasse aufgrund ihres geringen negativen Einflusses auf die mechanischen Eigenschaften der thermoplastischen Formmassen geschätzt und entsprechend eingesetzt.

Darüber hinaus wurden synergistische Kombinationen von Phosphinaten mit bestimmten stickstoffhaltigen Verbindungen, insbesondere mit Melaminderivaten, gefunden, die in einer ganzen Reihe von Polymeren als Flammschutzmittel effektiver wirken, als die Phosphinate allein (WO-A-2002/28953, WO-A-97/01664 sowie DE-A-19734437 und DE-A-19737727).

Ferner wurde gefunden, dass die Flammschutzwirkung der verschiedenen Phosphinate in thermoplastischen Polymeren auch durch Zusätze kleiner Mengen anorganischer bzw. mineralischer Verbindungen, die keinen Stickstoff enthalten, deutlich verbessert werden kann und dass die genannten Zusätze auch die Flammschutzwirkung von Phosphinaten in Kombination mit stickstoffhaltigen Synergisten verbessern können (EP-A-0024167, WO-A-2004/016684).

Bei der Verwendung von phosphinathaltigen Flammschutzmittelsystemen kam es insbesondere bei Verarbeitungstemperaturen oberhalb 300 °C anfänglich zu partiellem Polymerabbau, zu Verfärbungen des Polymers und zur Qualmentwicklung bei der Verarbeitung. Diese Schwierigkeiten ließen sich jedoch durch Zusatz von basischen oder amphoteren Oxiden, Hydroxiden, Carbonaten, Silikaten, Boraten oder Stannaten eindämmen (WO-A-2004/022640).

WO 2014/135256 A1 beschreibt flammhemmende Polyamidzusammensetzungen, enthaltend als Komponente A 1-96 Gew.-% eines oder mehrere thermoplastische Polyamide, als Komponente B 2-25 Gew.-% eines Dialkylphosphinsäuresalzes und/oder eines Diphosphinsäuresalzes und/oder deren Polymere, als Komponente C 1-20 Gew.-% eines Salzes der phosphorigen Säure und als Komponente D 1-50 Gew.-% Füll- oder Verstärkungsstoff.

Zur flammwidrigen Ausrüstung von Polymeren werden neben Phosphinaten auch Phosphazene beschrieben. So beschreibt die WO-A-2009/037859 flammwidrige Polyamide mit 20 - 80 Gew.-% Polyamid, 5 - 30 Gew.-% einer Phosphinatverbindung und 0,01 - 10 Gew.-% einer Phosphazenverbindung. Es handelt sich hierbei um teilaromatische Polyamide, die Schmelzpunkte liegen zwischen 280 und 340 °C. Füll- und Verstärkungsstoffe sowie weitere Additive können ebenfalls verwendet werden.

Die DE-A-60011058 beschreibt flammhemmende aromatische Polyamide mit 100 Gew.-Teilen eines aromatischen Polyamidharzes, 0,1 - 100 Gew.-Teile einer vernetzten Phosphazenverbindung, 1 - 60 Gew.-Teile einer anorganischen, faserartigen Substanz und 1- 60 Gew.-Teile Magnesiumhydroxid.

Die JP-A-2007-138151 beschreibt flammwidrige Polyamide mit Phosphazenen. Phosphinate werden als weitere Flammschutzmittel erwähnt, in den Beispielen wird in Polyamid 66 Phosphazen mit Melamincyanurat und einem Phenolharz als Aschebildner kombiniert. Ohne PTFE-Zusatz wird kein V-0 erreicht. Nachteilig an der Zugabe von Phenolharzen sind aber meist Verfärbungen. Hinweise auf positive Effekte einer Kombination von Phosphazen und Phosphinat finden sich nicht.

Die DE-A-69907251 beschreibt flammhemmende Harzusammensetzungen aus 100 Gew.-Teilen eines thermoplastischen Harzes, 0,001 - 50 Gew.-Teilen eines thermotropen Flüssigkristallpolymers und 1 - 30 Gew.-Teile einer halogenfreien Phosphazenverbindung. Nachteilig an dem notwendigen Zusatz eines flüssigkristallinen Polymers ist der hohe Preis und die schwierige Verarbeitung derartiger Formmassen.

Die Verarbeitung von thermoplastischen Kunststoffen erfolgt überwiegend in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren, setzt man je nach Kunststoff unterschiedliche Additive ein.

Oft werden unterschiedlicher Additive gleichzeitig verwendet, von denen jedes eine bestimmte Aufgabe übernimmt. So werden Antioxidantien und Stabilisatoren eingesetzt, damit der Kunststoff ohne chemische Schädigung die Verarbeitung übersteht und anschließend lange Zeit gegen äußere Einflüsse wie Hitze, UV-Licht, Witterung und Sauerstoff (Luft) stabil ist. Neben der Verbesserung des Fließverhaltens verhindern Gleitmittel ein zu starkes Kleben der Kunststoffschmelze an heißen Maschinenteilen und wirken als Dispergiermittel für Pigmente, Füll- und Verstärkungsstoffe.

Durch die Verwendung von Flammschutzmitteln kann die Stabilität von Kunststoffen bei der Verarbeitung in der Schmelze beeinflusst werden. Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann beispielsweise zu verstärktem Polymerabbau, zu Vernetzungsreaktionen, zu Ausgasungen oder zu Verfärbungen kommen.

Polyamide werden z. B. durch kleine Mengen von Kupferhalogeniden sowie aromatischen Aminen und sterisch gehinderten Phenole stabilisiert, wobei die Erzielung einer langfristigen Stabilität bei hohen Dauergebrauchstemperaturen im Vordergrund steht (H. Zweifel (Ed.): "Plastics Additives Handbook", 5th Edition, Carl Hanser Verlag, München, 2000, Seiten 80 bis 84).

Insbesondere bei der Verwendung phosphorhaltiger Flammschutzmittel in Polyamiden erwies sich die Wirkung der bisher beschriebenen Stabilisatoren als unzureichend, speziell um die bei der Verarbeitung auftretenden Effekte wie Verfärbung und Molekulargewichtsabbau, zu unterdrücken. Halogenfreie Polyamidzusammensetzungen zeigen zudem häufig nicht ausreichende Glühdrahtergebnisse bezüglich der sogenannten Glow Wire Ignition Temperature (GWIT), das heißt es kommt an der 750 °C heißen Glühdrahtspitze zur unerwünschten Entzündung des Polyamids.

Es war daher Aufgabe der vorliegenden Erfindung, halogenfreie, flammgeschützte, thermoplastische Polyamidzusammensetzungen (Formmassen) auf Basis phosphinathaltiger Flammschutzsysteme zur Verfügung zu stellen, die eine hohe thermische Stabilität aufweisen, sowohl UL 94 V-0 bis hin zu 0,4 mm Wandstärke des Prüfkörpers als auch die Glühdrahtanforderungen Glow Wire Flammability Index (GWFI) 960 °C und GWIT 775 °C bei allen geprüften Wandstärken sicher erfüllen, keine Migrationseffekte zeigen und gute Fließfähigkeit sowie hohe elektrische Werte (Comparative Tracking Index (CTI) > 550V) zeigen.

Es wurde nun überraschend gefunden, dass vor allem die Glühdrahtbeständigkeit und die Schlagzähigkeit von phosphinathaltigen flammgeschützten thermoplastischen Polyamiden deutlich verbessert werden kann, wenn die Formmasse zusätzlich zu den Phosphinaten (Komponente B)) ein Salz der phosphorigen Säure (auch als Phosphonsäure bezeichnet) HP(=O)(OH)₂ (Komponente C)) und ein Phosphazen (Komponente D)) enthält. Bei dieser speziellen Kombination bleibt das ausgeglichene Eigenschaftsprofil der Polyamide hinsichtlich elektrischer und mechanischer Eigenschaften weitgehend erhalten.

Darüber hinaus kann die Polyamid-Zusammensetzung (Formmasse) als

Komponente E) Füll- und/oder Verstärkungsstoffe enthalten.

Weiterhin kann die erfindungsgemäße Polyamidzusammensetzung als Komponente F) ein Phosphonit oder ein Phosphonit/Phosphit-Gemisch und als Komponente G) einen Ester oder ein Salz von langkettigen aliphatischen Carbonsäuren (Fettsäuren), die typischerweise Kettenlängen von C₁₄ bis C₄₀ aufweisen, enthalten.

Gegenstand der Erfindung ist daher eine flammhemmende Polyamidzusammensetzung, enthaltend als Komponente A) 1 bis 96 Gew.-% eines oder mehrere thermoplastische Polyamide, als Komponente B) 2 bis 25 Gew.-% eines Dialkylphosphinsäuresalzes der Formel (I) und/oder eines Diphosphinsäuresalzes der Formel (II) und/oder deren Polymere, 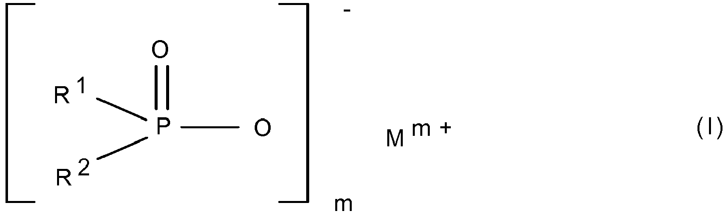 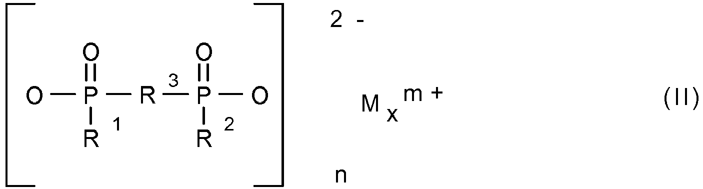 worin
- R¹, R²: gleich oder verschieden sind und C₁-C₆-Alkyl, linear oder verzweigt oder H:
- R³: C₁-C₁₀-Alkylen, linear oder verzweigt, C₆-C₁₀-Arylen, C₇-C₂₀ -Alkylarylen oder C₇-C₂₀ -Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten,
als Komponente C) 1 bis 20 Gew.-% eines Salzes der phosphorigen Säure, als Komponente D) 1 bis 20 Gew. % eines Phosphazenes der allgemeinen Formeln (III) oder (IV) 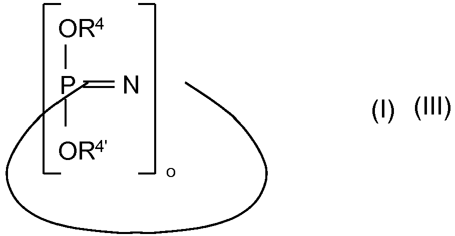 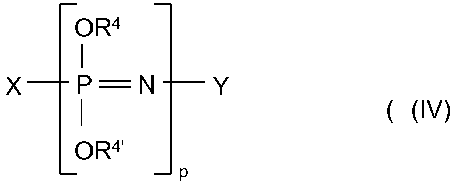 worin in Formel (III)
- o: eine ganze Zahl von 3 bis 25 und in Formel (IV)
- p: eine ganze Zahl von 3 bis 1000 bedeutet, und
- X: für ―N = P(OPh)₃ oder ―N = P(O)OPh und
- Y: für ―P(OPh)₄ oder ―P(O)(OPh)₂ steht,
- R⁴ und R^{4'}: gleich oder verschieden sind und für C₁-C₂₀-Alkyl, C₆-C₃₀-Aryl, C₆-C₃₀-Arylalkyl oder C₆-C₃₀-Alkyl substituiertes Aryl stehen

als Komponente E) 0 bis 50 Gew.-% Füll- oder Verstärkungsstoff,
als Komponente F) 0 bis 2 Gew.-% eines Phosphonits oder einer Mischung aus einem Phosphonit und einem Phosphit und
als Komponente G) 0 bis 2 Gew.-% eines Esters oder Salzes von langkettigen aliphatischen Carbonsäuren (Fettsäuren), die typischerweise Kettenlängen von C₁₄ bis C₄₀ aufweisen, wobei die Summe der Komponenten immer 100 Gew.-% beträgt.

Bevorzugt enthält die flammhemmende Polyamidzusammensetzung
15 bis 89,9 Gew.-% Komponente A),
5 bis 20 Gew.-% Komponente B),
2 bis 10 Gew.-% Komponente C),
2 bis 10 Gew.-% Komponente D),
1 bis 50 Gew.-% Komponente E),
0 bis 2 Gew.-% Komponente F) und
0,1 bis 1 Gew.-% Komponente G).

Besonders bevorzugt enthält die flammhemmende Polyamidzusammensetzung
15 bis 75,8 Gew.-% Komponente A),
5 bis 20 Gew.-% Komponente B),
2 bis 10 Gew.-% Komponente C),
2 bis 10 Gew.-% Komponente D),
15 bis 35 Gew.-% Komponente E),
0,1 bis 1 Gew.-% Komponente F) und
0,1 bis 1 Gew.% Komponente G).

Insbesondere bevorzugt enthält die flammhemmende Polyamidzusammensetzung
35 bis 65,8 Gew.-% Komponente A),
5 bis 20 Gew.-% Komponente B),
2 bis 7 Gew.-% Komponente C),
2 bis 7 Gew.-% Komponente D),
25 bis 35 Gew.-% Komponente E),
0,1 bis 5 Gew.-% Komponente F) und
0,1 bis 5 Gew.% Komponente G).

In einer anderen Ausführungsform enthält die flammhemmende Polyamidzusammensetzung
35 bis 96 Gew.-% Komponente A),
2 bis 25 Gew.-% Komponente B),
1 bis 20 Gew.-% Komponente C),
1 bis 20 Gew.-% Komponente D),
0 bis 50 Gew.-% Komponente E),
0 bis 2 Gew.-% Komponente F) und
0 bis 2 Gew.% Komponente G).

Bevorzugt weist die flammhemmende Polyamidzusammensetzung einen Comparative Tracking Index (CTI) gemessen nach der International Electrotechnical Commission Standard IEC-60112/3 von größer als 550 Volt auf.

Bevorzugt erreicht die flammhemmende Polyamidzusammensetzung eine Bewertung von V0 nach UL-94 bei einer Dicke des Probenkörpers von 3.2 mm bis 0,4 mm.

Bevorzugt weist die flammhemmende Polyamidzusammensetzung einen Glow Wire Flammability Index (GWFI) nach IEC-60695-2-12 von 960 °C bei einer Dicke des Probenkörpers von 0,75 - 3 mm auf.

Bevorzugt weist die flammhemmende Polyamidzusammensetzung einen Glow Wire Ignition Temperature Index (GWIT) nach IEC-60695-2-13 von 750 °C oder mehr bei einer Dicke des Probenkörpers von 0,75 - 3 mm auf.

Bevorzugt ist das Polyamid (PA) ausgewählt aus der Gruppe PA 6, PA 6,6, PA 4,6, PA 12, PA 6,10, PA 4,10, PA 10,10, PA 11, PA 6T/66, PA 6T/6, PA 4T, PA 9T, PA 10T, Polyamid-Copolymere, Polyamid-Blends sowie Kombinationen davon.

Bevorzugt handelt es sich bei Komponente A) um Polyamid 66 oder Copolymere oder Polymer Blends aus Polyamid 66 und Polyamid 6.

Bevorzugt handelt es sich bei den Phosphazenen um Phenoxyphosphazene.

Bevorzugt sind bei der Komponente B) R¹, R² gleich oder verschieden und bedeuten Methyl, Ethyl, n-Propyl, iso-Propyl, n-Butyl, tert.-Butyl und/oder n-Pentyl. Bevorzugt bedeutet bei der Komponente B) R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen. Bevorzugt entspricht das Salz der phosphorigen Säure (Komponente C)) der allgemeinen Formel (V)

[HP(=O)O2]²⁻ M ^{m+} (V)

worin
- M: Mg, Ca, Al, Sb, Sn, Ge, Ti, Zn, Fe, Zr, Ce, Bi, Sr, Mn, Li, Na und/oder K bedeutet.
Bevorzugt handelt es sich bei dem Salz der phosphorigen Säure (Komponente C)) um Aluminiumphosphit Al(H₂PO₃)₃, sekundäres Aluminiumphosphit Al₂(HPO₃)₃, Aluminiumphosphittetrahydrat Al₂(HPO₃)₃*4aq, Aluminiumphosphonat, basisches Aluminiumphosphit Al(OH)(H₂PO₃)₂*2aq, Al₇(HPO₃)₉(OH)₆(1,6-Hexandiamin)_{1,5}*12H₂O, Al₂(HPO₃)₃*xAl₂O₃*nH₂O mit × = 1 - 2,27 und n = 1 - 50 und/oder Al₄H₆P₁₆O₁₈ .

Bevorzugt handelt es sich bei dem Salz der phosphorigen Säure auch um Aluminiumphosphite der Formeln (VI), (VII) und/oder (VIII), wobei

Formel (VI): Al₂(HPO₃)₃ × (H₂O)q

umfasst und
- q: 0 bis 4 bedeutet

Formel (VII): Al_{2,00}M_{z}(HPO₃)_{y}(OH)ᵥ × (H₂O)_{w}

umfasst und
- M: Alkalimetallionen,
- z: 0,01 bis 1,5,
- y: 2,63 bis 3,5,
- v: 0 bis 2 und
- w: 0 bis 4 bedeutet;

Formel (VIII): Al_{2,00}(HPO₃)ᵤ(H₂PO₃)ₜ × (H₂O)ₛ

umfasst und
- u: 2 bis 2,99 und
- t: 2 bis 0,01 und
- s: 0 bis 4 bedeutet,
oder das Aluminiumphosphit Mischungen von Aluminiumphosphit der Formel (VI) mit schwerlöslichen Aluminiumsalzen und stickstofffreien Fremdionen, Mischungen von Aluminiumphosphit der Formel (VIII) mit Aluminiumsalzen, um Mischungen von Aluminiumphosphiten der Formeln (VI), (VII) und/oder (VIII) mit Aluminiumphosphit [Al(H₂PO₃)₃], mit sekundärem Aluminiumphosphit [Al₂(HPO₃)₃], mit basischem Aluminiumphosphit [Al(OH)(H₂PO₃)₂*2aq], mit Aluminiumphosphittetrahydrat [Al₂(HPO₃)₃*4aq], mit Aluminiumphosphonat, mit Al₇(HPO₃)₉(OH)₆(1,6-Hexandiamin)_{1,5}*12H₂O, mit Al₂(HPO₃)₃*xAl₂O₃*nH₂O mit × = 1 - 2,27 und n = 1 - 50 und/oder mit Al₄H₆P₁₆O₁₈ umfasst.

Bevorzugt weist die Komponente C) eine mittlere Teilchengröße von 0,2 bis 100 µm auf.

Bevorzugt handelt es sich bei dem verstärkenden Füll- oder Verstärkungsstoff (Komponente E)) um Glasfasern.

Bevorzugt handelt es sich bei den Phosphoniten (Komponente F)) um solche der allgemeinen Struktur

R-[P(OR⁵)₂]ₘ (IX)

wobei
- R: ein ein- oder mehrwertiger aliphatischer, aromatischer oder heteroaromatischer organischer Rest ist und
- R⁵: eine Verbindung der Struktur (X) 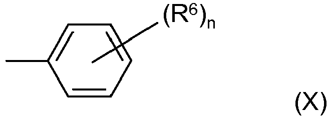
ist oder die beiden Reste R⁵ eine verbrückende Gruppe der Struktur (XI) bilden 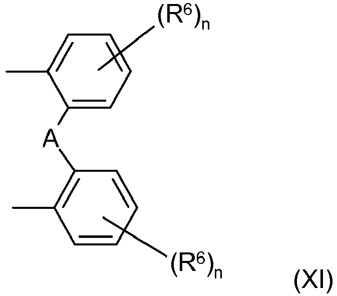 mit
- A: direkter Bindung, O, S, C₁₋₁₈-Alkylen (linear oder verzweigt), C₁₋₁₈-Alkyliden (linear oder verzweigt), in denen
- R⁶: unabhängig voneinander C₁₋₁₂-Alkyl (linear oder verzweigt), C₁₋₁₂-Alkoxy und/oder C₅₋₁₂-Cycloalkyl bedeuten und
- n: 0 bis 5 sowie
- m: 1 bis 4 bedeutet.

Bevorzugt handelt es sich bei der Komponente G) um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit.

Die Erfindung betrifft auch einen dreidimensionalen Artikel umfassend die flammhemmende Polyamidzusammensetzung nach einem oder mehreren der Ansprüche 1 bis 21, dadurch gekennzeichnet, dass es sich hierbei um Formkörper, Spritzgussteile, Extrusionsmassen und/oder Extrusionsteile handelt.

Die Erfindung betrifft zudem die Verwendung einer flammhemmenden Polyamidzusammensetzung nach einem oder mehreren der Ansprüche 1 bis 11 in oder für Steckverbinder, stromberührten Teilen in Stromverteilern (FI-Schutz), Platinen, Vergußmassen, Stromsteckern, Schutzschaltern, Lampengehäuse, LED Gehäuse, Kondensatorgehäuse, Spulenkörper und Ventilatoren, Schutzkontakte, Stecker, in/auf Platinen, Gehäuse für Stecker, Kabel, flexible Leiterplatten, Ladekabel für Handys, Motorabdeckungen, Textilbeschichtungen und anderen Produkten.

Die Herstellung der erfindungsgemäß einsetzbaren Phosphazene ist in der EP-A-0945478 beschrieben.

Besonders bevorzugt sind cyclische Phenoxyphosphazene der Formel (XII) P3N3C36 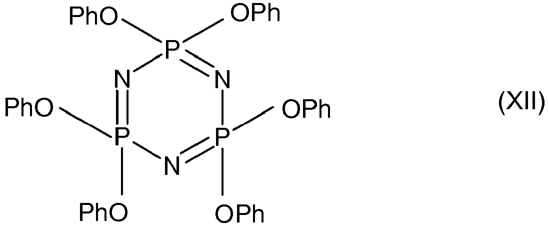 oder lineare Phenoxyphosphazene nach Formel (XIII)

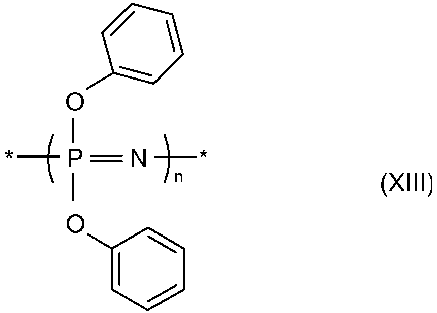

Die Phenylreste können gegebenenfalls substituiert sein. Phosphazene im Sinne der vorliegenden Anmeldung sind beschrieben in Mark, J. A., Allcock, H. R., West, R., "Inorganic Polymers", Prentice Hall International, 1992, pages 61 - 141.

Bevorzugt handelt es sich bei Komponente A) um Polyamid 66 oder Copolymere oder Polymer Blends aus Polyamid 66 und Polyamid 6.

Bevorzugt besteht die Komponente A) zu mindestens 75 Gew.-% aus Polyamid 66 und höchstens 25 Gew.-% aus Polyamid 6.

Überraschenderweise wurde gefunden, dass die erfindungsgemäßen flammhemmenden Polyamidzusammensetzungen eine gute Flammschutzwirkung (V-0 und GWFI/GWIT) aufweisen kombiniert mit einer verbesserten Fließfähigkeit, hoher thermischer Stabilität und hoher Schlagzähigkeit. Der Polymerabbau wird verhindert bzw. sehr stark reduziert und es werden keine Formbeläge und keine Ausblühungen beobachtet. Die erfindungsgemäßen flammhemmenden Polyamidzusammensetzungen zeigen zudem nur geringe Verfärbung bei der Verarbeitung in der Schmelze.

Als Komponente A) enthalten die Zusammensetzungen erfindungsgemäß mindestens ein thermoplastisches Polyamid.

Unter thermoplastischen Polyamiden werden in Anlehnung an Hans Domininghaus in "Die Kunststoffe und ihre Eigenschaften", 5. Auflage (1998), Seite 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß bevorzugten Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet werden. Geeignet sind auch Blends mit Anteilen von anderen Polymeren, bevorzugt von Polyethylen, Polypropylen, ABS, wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit, insbesondere wenn es verstärkte Polyamide sind. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugt als Komponente A) einzusetzende Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Edukte kommen aliphatische und/oder aromatische Dicarbonsäuren, bevorzugt Adipinsäure, 2,2,4- und 2,4,4-Trimethyladipinsäure, Azelainsäure, Sebazinsäure, Isophthalsäure, Terephthalsäure, aliphatische und/oder aromatische Diamine, bevorzugt Tetramethylendiamin, Hexamethylendiamin, 1,9-Nonandiamin, 2,2,4- und 2,4,4-Trimethylhexamethylendiamin, die isomeren Diaminodicyclohexylmethane, Diaminodicyclohexylpropane, Bis-aminomethylcyclohexan, Phenylendiamine, Xylylendiamine, Aminocarbonsäuren, bevorzugt Aminocapronsäure oder die entsprechenden Lactame in Betracht. Copolyamide aus mehreren der genannten Monomeren sind eingeschlossen. Besonders bevorzugt werden Caprolactame, ganz besonders bevorzugt wird [epsilon]-Caprolactam eingesetzt.

Besonders geeignet sind weiterhin die meisten auf PA6, PA66 und anderen aliphatischen oder/und aromatischen Polyamiden bzw. Copolyamiden basierenden Compounds, bei denen auf eine Polyamidgruppe in der Polymerkette 3 bis 11 Methylengruppen kommen.

Bevorzugt handelt es sich bei den Polyamiden und Copolyamiden um Polyamid 12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10, Polyamid 11, Polyamid 12, usw. Diese sind z. B unter den Handelsnamen Nylon^{®}, Fa. DuPont, Ultramid^{®}, Fa. BASF, Akulon^{®} K122, Fa. DSM, Zytel^{®} 7301, Fa. DuPont; Durethan^{®} B 29, Fa. Bayer und Grillamid^{®}, Fa. Ems Chemie bekannt.

Bevorzugt geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

In einer bevorzugten Ausführungsform enthalten die erfindungsgemäßen Zusammensetzungen neben dem erfindungsgemäß einzusetzenden thermoplastischen Polyamid wenigstens ein weiteres thermoplastisches Polymer, besonders bevorzugt wenigstens ein anderes Polyamid.

Bevorzugt sind aliphatische Polyamide, insbesondere PA6 und PA66 und PA 6T/66 und PA 6T/6. Ganz besonders bevorzugt sind Mischungen aus Polyamid 66 und Polyamid 6 mit bevorzugt Polyamid 66 mehr als 50 Gew.-% und Polyamid 6 weniger als 50 Gew.-% und besonders bevorzugt Polyamid 6 mit weniger als 25 Gew.-%, jeweils bezogen auf die Gesamtmenge Polyamid.

Bevorzugt sind auch Blends aus Polyamid 66 und einem oder mehrerer teilaromatischer, amorpher Polyamide.

Den neben dem thermoplastischen Polyamid in einer bevorzugten Ausführungsform zusätzlich einzusetzenden Polymeren können übliche Additive, insbesondere Entformungsmittel, Stabilisatoren und/oder Fließhilfsmittel in der Schmelze zugemischt oder auf der Oberfläche aufgebracht werden. Ausgangsstoffe für die thermoplastischen Polyamide der Komponente A) können synthetisch z. B. aus petrochemischen Rohstoffen und/oder über chemische oder biochemische Prozesse aus nachwachsenden Rohstoffen hervorgegangen sein.

Auch andere hier nicht speziell erwähnte Flammschutzmittel oder Flammschutzmittelsynergisten können zum Einsatz kommen. Insbesondere stickstoffhaltige Flammschutzmittel wie Melamincyanurat, kondensiertes Melamin (Melem, Melon) oder Melaminphosphate und Melaminpolyphosphate können zugesetzt werden. Es können auch weitere Phosphorflammschutzmittel wie Arylphosphate oder roter Phosphor verwendet werden. Ferner können auch Salze aliphatischer und aromatischer Sulfonsäuren und mineralische Flammschutzadditive wie Aluminium- und/oder Magnesiumhydroxid, Ca-Mg-Carbonat-Hydrate (z. B. DE-A-4236122 ) eingesetzt werden. In Frage kommen ferner Flammschutzmittelsynergisten aus der Gruppe der sauerstoff-, stickstoff- oder schwefelhaltigen Metallverbindung, bevorzugt Zinkoxid, Zinkborat, Zinkstannat, Zinkhydroxystannat, Zinksulfid, Molybdänoxid, Titandioxid, Magnesiumoxid, Magnesiumcarbonat, Calciumcarbonat, Calciumoxid, Titannitrid, Bornitrid, Magnesiumnitrid, Zinknitrid, Zinkphosphat, Calciumphosphat, Calciumborat, Magnesiumborat oder deren Mischungen.

Weitere bevorzugt geeignete Flammschutzadditive sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die Flammschutzmittel können in Reinform, sowie über Masterbatche oder Kompaktate zugesetzt werden.

Bevorzugt handelt es sich bei Komponente B um das Aluminium- oder das Zinksalz der Diethylphosphinsäure.

Bevorzugt bedeutet beim Aluminiumphosphit der Formel (VI)
- q: 0,01 bis 0,1.

Bevorzugt bedeutet beim Aluminiumphosphit der Formel (VII)
- z: 0,15 bis 0,4;
- y: 2,80 bis 3;
- v: 0,1 bis 0,4 und
- w: 0,01 bis 0,1.

Bevorzugt bedeutet beim Aluminiumphosphit der Formel (VIII)
- u: 2,834 bis 2,99;
- t: 0,332 bis 0,03 und
- s: 0,01 bis 0,1.

Bevorzugt handelt es sich bei dem Phosphazen (Komponente D)) um ein cyclisches Phenoxyphosphazen der Formel P₃N₃C_{36.}

Als Komponente E) können die erfindungsgemäßen flammhemmenden Polyamidzusammensetzungen in einer weiteren bevorzugten Ausführungsform mindestens einen Füllstoff oder Verstärkungsstoff enthalten.

Dabei können auch Mischungen aus zwei oder mehreren unterschiedlichen Füllstoffen und/oder Verstärkungsstoffen, bevorzugt auf Basis von Talk, Glimmer, Silikat, Quarz, Titandioxid, Wollastonit, Kaolin, amorphe Kieselsäuren, nanoskalige Mineralien, besonders bevorzugt Montmorillonite oder Nano-Böhmit, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern eingesetzt, wobei Glasfasern ganz besonders bevorzugt sind.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Bevorzugt seien nadelförmige Wollastonite genannt. Bevorzugt weist das Mineral ein Länge zu Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäß einsetzbaren nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS Granulometer.

Der Füllstoff und/oder Verstärkungsstoff kann in einer bevorzugten Ausführungsform oberflächenmodifiziert sein, vorzugsweise mit einem Haftvermittler bzw. Haftvermittlersystem, besonders bevorzugt auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß ganz besonders bevorzugt als Komponente E) einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Diese Fasern können mit einem geeigneten Schlichtesystem und einem Haftvermittler bzw. Haftvermittlersystem, bevorzugt auf Silanbasis, ausgerüstet sein.

Die erfindungsgemäßen Polyamidzusammensetzungen können noch weitere Additive enthalten. Bevorzugte Additive im Sinne der vorliegenden Erfindung sind Antioxdantien, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren Farbstoffe und Pigmente. Die Additive können alleine oder in Mischung bzw. in Form von Masterbatchen eingesetzt werden.

Geeignete Antioxidantien sind beispielsweise alkylierte Monophenole, z. B. 2,6-Di-tert-butyl-4-methylphenol; Alkylthiomethylphenole, z. B. 2,4-Di-octylthiomethyl-6-tert-butylphenol; Hydrochinone und alkylierte Hydrochinone, z. B. 2,6-Di-tert-butyl-4-methoxyphenol; Tocopherole, z. B. α-Tocopherol, β-Tocopherol, γ-Tocopherol, δ-Tocopherol und Mischungen davon (Vitamin E); Hydroxylierte Thiodiphenylether, z. B. 2,2'-Thio-bis(6-tert-butyl-4-methylphenol), 2,2'-Thio-bis(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-di-methyl-4-hydroxyphenyl)-disulfic; Alkyliden-Bisphenole, z. B. 2,2'-Methylen-bis-(6-tert-butyl-4-methylphenol;

O-, N- und S-Benzylverbindungen, z. B. 3,5,3',5'-Tetra-tert-butyl-4,4'-dihydroxydibenzylether; Hydroxybenzylierte Malonate, z. B. Dioctadecyl-2,2-bis-(3,5-di-tert-butyl-2-hydrorybenzyl)-malonat; Hydroxybenzyl-Aromaten, z. B. 1,3,5-Tris-(3,5-di-tert-buty)-4-hydroxybenzyl)-2,4,6-trimethylbenzo1, 1,4-Bis-(3,5-di-tert-butyl-4-hydroxybenzyl)-2,3,5,6-tetramethylbenzot 2,4,6-Tris-(3,5-di-tert-buryl-4-hydroxybenzyl)-phenol; Triazinverbindungen, z. B. 2,4-Bis-octylmercapto-6(3,5-di-tert-butyl-4-hydroxyanilino)-1,3,5-triazin; Benzylphosphonate, z. B. Dimethyl-2,5-di-tert-butyl-4-hydroxybenzylphosphonat; Acylaminophenole, 4-Hydroxylaurinsäureamid, 4 Hydroxystearinsäureanilid, N-(3,5-di-tert-butyl-4-hydroxyphenyl)-carbaminsäureoctylester; Ester der β-(3.5-Di-tert-butyl-4-hydroxyphenyl)-propionsäure mit ein- oder mehr-wertigen Alkoholen; Ester der β -(5-tert-Butyl-4-hydroxy-3-methylphenyl)-propionsäure mit ein- oder mehrwertigen Alkoholen; Ester der β-(3,5-Dicyclohexyl-4-hydroxyphenyl)-propionsäure mit ein- oder mehr-wertigen Alkoholen; Ester der 3,5-Di-tert-butyl-4-hydroxyphenylessigsäure mit ein- oder mehrwertigen Alkoholen; Amide der β-(3,5-Di-tert-butyl-4-hydroxyphenyl)-propionsäure, wie z. B. N,N' Bis-(3,5-di-tert-butyl4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Besonders bevorzugt werden sterisch gehinderte Phenole alleine oder in Kombination mit Phosphiten eingesetzt, wobei die Verwendung von N,N'-Bis[3-(3',5'-di-tert-butyl-4'-hydroxyphenyl)propionyl]hexamethylenediamine (z. B. Irganox^{®} 1098 der Fa. BASF SE, Ludwigshafen. Deutschland) ganz besonders bevorzugt ist.

Geeignete UV-Absorber und Lichtschutzmittel sind beispielsweise 2-(2'-Hydroxyphenyl)-benzotriazole, wie z. B. 2-(2'-Hydroxy-5'-methylphenyl)-benzotriazol; 2-Hydroxybenzophenone, wie z. B. das 4-Hydroxy, 4-Methoxy, 4-Octoxy, 4-Decyloxy-, 4-Dodecyloxy-, 4-Benzyloxy-, 4,2',4-Trihydroxy-, 2'-Hydroxy-4,4'-dimethoxy-Derivat;

Ester von gegebenenfalls substituierten Benzoesäuren, wie z. B. 4-tert-Butylphenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoe-säure-2-methyl-4,6-di-tert-butylphenylester; Acrylate, wie z. B. α-Cyan-β,β-diphenylacrylsäure-ethylester bzw. -isooctylester, α-Carbomethoxy-zimtsäuremethylester, α-Cyano-β-methyl-p-methoxy-zimtsäuremethyl-ester bzw. butylester, α-Carbomethoxy-p-methoxyzimtsäuremethylester, N-(β-Carbo-methoxy-β-cyanovinyl)-2-methyl-indolin.

Als Farbmittel werden bevorzugt anorganische Pigmente, insbesondere Titandioxid, Ultramarinblau, Eisenoxid, Zinksulfid oder Ruß, weiterhin organische Pigmente, bevorzugt Phthalocyanine, Chinacridone, Perylene sowie Farbstoffe, bevorzugt Nigrosin und Anthrachinone eingesetzt.

Geeignete Polyamidstabilisatoren sind z. B. Kupfersalze in Kombination mit Jodiden und/oder Phosphorverbindungen und Salze des zweiwertigen Mangans.

Geeignete basische Co-Stabilisatoren sind Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

Geeignete Nukleierungsmittel sind z. B. 4-tert-Butylbenzoesäure, Adipinsäure und Diphenylessigsäure, Aluminiumoxid oder Siliziumdioxid sowie ganz besonders bevorzugt Talkum, wobei diese Aufzählung nicht abschließend ist.

Als Fließhilfsmittel werden bevorzugt Copolymerisate aus mindestens einem α-Olefin mit mindestens einem Methacrylsäurester oder Acrylsäureester eines aliphatischen Alkohols eingesetzt. Besonders bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20 C-Atomen enthält. Ganz besonders bevorzugt ist Acrylsäure-(2-ethyl)-hexylester.

Als Fließhilfsmittel erfindungsgemäß geeignete Copolymerisate zeichnen sich neben der Zusammensetzung auch durch das niedrige Molekulargewicht aus. Dementsprechend sind für die erfindungsgemäß vor thermischem Abbau zu bewahrenden Zusammensetzungen vor allem Copolymerisate geeignet, die einen Melt-Flow-Index (MFI)-Wert gemessen bei 190 °C und einer Belastung von 2,16 kg von mindestens 100 g/10 min, bevorzugt von mindestens 150 g/10 min, besonders bevorzugt von mindestens 300 g/10 min aufweisen. Der MFI dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190 °C und einem Prüfgewicht von 2,16 kg gemessen bzw. bestimmt.

Bevorzugt einzusetzende Weichmacher sind Phthalsäuredioctylester, Phthalsäuredibenzylester, Phthalsäurebutylbenzylester, Kohlenwasserstofföle oder N-(n-Butyl)benzolsulfonamid.

Die vorliegende Erfindung betrifft aber auch Erzeugnisse, bevorzugt Fasern, Folien oder Formkörper, erhältlich aus den erfindungsgemäß beschriebenen Zusammensetzungen durch Spritzguss oder Extrusion.

Geeignete Phosphinate (Komponente B)) sind in der PCT/WO97/39053 beschrieben, auf die ausdrücklich Bezug genommen wird. Besonders bevorzugte Phosphinate sind Aluminium-, Calcium- und Zinkphosphinate.

Bevorzugte Salze der phosphorigen Säure (Komponente C)) sind in Wasser unlösliche bzw. schwerlösliche Salze.

Besonders bevorzugte Salze der phosphorigen Säure sind das Aluminium-, das Calcium- und das Zinksalze.

Besonders bevorzugt handelt es sich bei Komponente C) um ein Umsetzungsprodukt aus phosphoriger Säure und einer Aluminiumverbindung.

Bevorzugt sind Aluminiumphosphite mit den CAS-Nummern 15099-32-8, 119103-85-4, 220689-59-8, 56287-23-1, 156024-71-4, 71449-76-8 und 15099-32-8.

Bevorzugt haben die Aluminiumphosphite Teilchengrößen von 0,2 - 100 µm.

Die Herstellung der bevorzugten Aluminiumphosphite erfolgt durch Umsetzung einer Aluminiumquelle mit einer Phosphorquelle und wahlweise einem Templat in einem Lösungsmittel bei 20 - 200 °C während einer Zeitspanne bis zu 4 Tagen. Aluminiumquelle und Phosphorquelle werden dazu 1 - 4 h vermischt, unter hydrothermalen Bedingungen oder am Rückfluss erhitzt, abfiltriert, gewaschen und z. B. bei 110 °C getrocknet.

Bevorzugte Aluminumquellen sind Aluminiumisopropoxid, Aluminiumnitrat, Aluminiumchlorid und Aluminiumhydroxid (z. B. Pseudoböhmit).

Bevorzugte Phosphorquellen sind phosphorige Säure, (saures) Ammoniumphosphit, Alkaliphosphite oder Erdalkaliphosphite.

Bevorzugte Alkaliphosphite sind Dinatriumphosphit, Dinatriumphosphithydrat, Trinatriumphosphit und Kaliumhydrogenphosphit.

Bevorzugtes Dinatriumphosphithydrat ist Brüggolen^{®} H10 der Fa. Brüggemann.

Bevorzugte Template sind 1,6-Hexandiamin, Guanidincarbonat oder Ammoniak.

Bevorzugtes Erdalkaliphosphit ist Calciumphosphit.

Das bevorzugte Verhältnis von Aluminium zu Phosphor zu Lösungsmittel ist dabei 1 : 1 : 3,7 bis 1 : 2,2 : 100 mol. Das Verhältnis von Aluminum zu Templat ist 1 : 0 bis 1 : 17 mol. Der bevorzugte pH-Wert der Reaktionslösung ist 3 bis 9. Bevorzugtes Lösungsmittel ist Wasser.

Besonders bevorzugt wird in der Anwendung das gleiche Salz der Phosphinsäure wie der phosphorigen Säure verwendet, also z. B. Aluminiumdialkylphosphinat zusammen mit Aluminiumphosphit oder Zinkdialkylphosphinat zusammen mit Zinkphosphit.

Bevorzugt handelt es sich bei der Komponente G) um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit. Besonders bevorzugt handelt es sich um Aluminium-, Calcium- oder Zinkstearat oder Calciummontanat.

Als weitere Flammschutzmittel sind bevorzugt Arylphosphate, Phosphonate, Salze der hypophosphorigen Säure sowie roter Phosphor geeignet.

Bevorzugt sind bei den Phosphoniten die Reste
- R: C₄₋C₁₈-Alkyl (linear oder verzweigt), C₄₋C₁₈-Alkylen (linear oder verzweigt), C₅₋C₁₂-Cycloalkyl, C₅₋C₁₂-Cycloalkylen, C₆₋C₂₄-Aryl bzw. -Heteroaryl, C₆₋C₂₄-Arylen bzw. -Heteroarylen welche auch weiter substituiert sein können;
- R₁: eine Verbindung der Struktur (X) oder (XI) mit
- R₂: unabhängig voneinander C₁₋C₈-Alkyl (linear oder verzweigt), C₁₋C₈-Alkoxy, Cyclohexyl;
- A: direkte Bindung, O, C₁₋C₈-Alkylen (linear oder verzweigt), C₁₋C₈-Alkyliden (linear oder verzweigt) und
- n: 0 bis 3
- m: 1 bis 3.

Besonders bevorzugt bei den Phosphoniten sind die Reste
- R: Cyclohexyl, Phenyl, Phenylen, Biphenyl und Biphenylen
- R₁: eine Verbindung der Struktur (X) oder (XI) mit
- R₂: unabhängig voneinander C₁₋ C₈-Alkyl (linear oder verzweigt), C₁₋C₈-Alkoxy, Cyclohexyl
- A: direkte Bindung, O, C₁₋C₆-Alkyliden (linear oder verzweigt) und
- n: 1 bis 3
- m: 1 oder 2.

Weiterhin werden Gemische von Verbindungen gem. obiger Ansprüche in Kombination mit Phosphiten der Formel (XIV)

P(OR₁)₃ (XIV)

beansprucht, wobei R₁ die oben angegebenen Bedeutungen hat.

Insbesonders bevorzugt sind Verbindungen, die, basierend auf obigen Definitionen, durch eine Friedel-Crafts-Reaktion eines Aromaten oder Heteroaromaten, wie Benzol, Biphenyl- oder Diphenylether mit Phosphortrihalogeniden, bevorzugt Phosphortrichlorid, in Gegenwart eines Friedel-Crafts-Katalysators wie Aluminiumchlorid, Zinkchlorid, Eisenchlorid etc. sowie nachfolgender Reaktion mit den der Strukturen (X) und (XI) zugrundeliegenden Phenolen, hergestellt werden. Dabei werden ausdrücklich auch solche Gemische mit Phosphiten eingeschlossen, die nach der genannten Reaktionssequenz aus überschüssigem Phosphortrihalogenid und den vorstehend beschriebenen Phenolen entstehen.

Aus dieser Gruppe von Verbindungen sind wiederum die nachstehenden Strukturen (XV) und (XVI) bevorzugt: 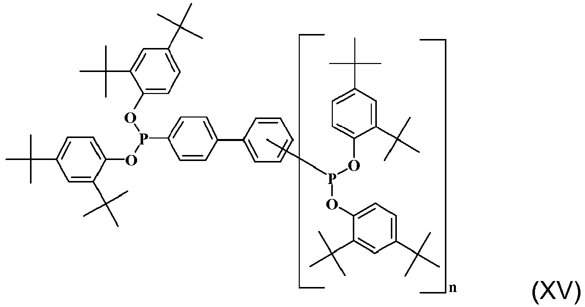 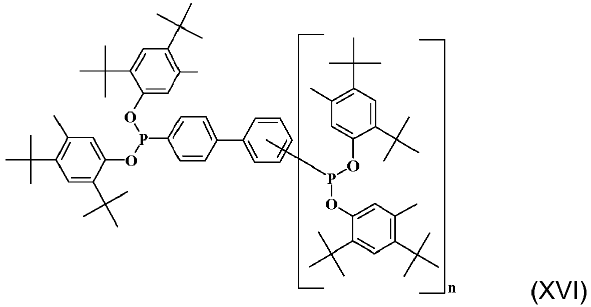 wobei n 0 oder 1 betragen kann und diese Gemische optional weiterhin noch Anteile der Verbindung (XVII) bzw. (XVIII) enthalten können:

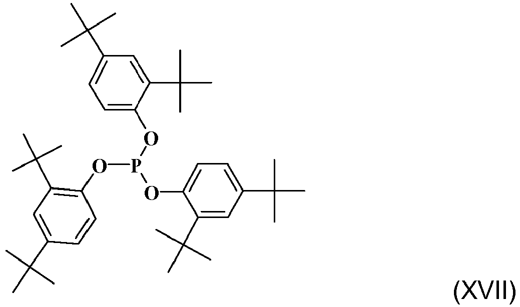

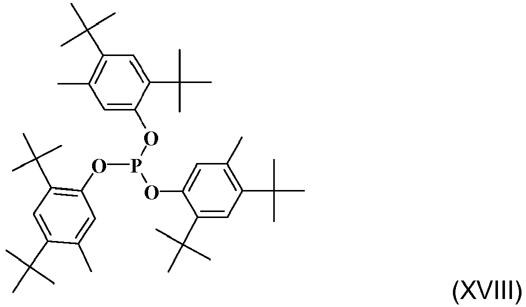

Geeignet als Komponente G) sind Ester oder Salze von langkettigen aliphatischen Carbonsäuren (Fettsäuren), die typischerweise Kettenlängen von C₁₄ bis C₄₀ aufweisen. Bei den Estern handelt es sich um Umsetzungsprodukte der genannten Carbonsäuren mit gebräuchlichen mehrwertigen Alkoholen, wie z. B. Ethylenglykol, Glycerin, Trimethylolpropan oder Pentaerythrit. Als Salze der genannten Carbonsäuren kommen vor allem Alkali- oder Erdalkalisalze bzw. Aluminium- und Zinksalze in Betracht.

Bevorzugt handelt es sich bei der Komponente G) um Ester oder Salze der Stearinsäure wie z. B. Glycerinmonostearat oder Calciumstearat.

Bevorzugt handelt es sich bei der Komponente G) auch um Umsetzungsprodukte von Montanwachssäuren mit Ethylenglykol.

Bevorzugt handelt es sich bei den Umsetzungsprodukten um eine Mischung aus Ethylenglykol-Mono-Montanwachssäureester, Ethylenglykoldimontanwachssäureester, Montanwachssäuren und Ethylenglykol.

Bevorzugt handelt es sich bei der Komponente G) auch um Umsetzungsprodukte von Montanwachssäuren mit einem Calciumsalz.

Besonders bevorzugt handelt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat und dem Calciumsalz.

Die erfindungsgemäßen Zusammensetzungen nach einem oder mehreren der Ansprüche 1 bis 20 weisen bevorzugt einen Glow Wire Ignition Temperature (GWIT), nach IEC-60695-2-13 von 775 °C oder mehr bei einer Dicke der Probenkörper von 0,75 - 3 mm auf.

Die vorgenannten Additive können in den verschiedensten Verfahrensschritten in den Kunststoff eingebracht werden. So ist es bei Polyamiden möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse, bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z. B. Spritzgießmaschine Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

### Beispiele

1. Eingesetzte Komponenten
   Handelsübliche Polyamide (Komponente A)):
      Polyamid 6.6 (PA 6.6-GV): Ultramid^{®} A27 (Fa. BASF SE, D)
      Polyamid 6: Ultramid^{®} B27 (Fa. BASF SE, D)
   Komponente E): Glasfasern PPG HP 3610 mit 10 µm Durchmesser und 4,5 mm Länge (Fa. PPG, NL)
   Flammschutzmittel (Komponente B)):
      Aluminiumsalz der Diethylphosphinsäure, im Folgenden als DEPAL bezeichnet
   Flammschutzmittel (Komponente C)):
      Aluminiumsalz der phosphorigen Säure, im Folgenden als PHOPAL bezeichnet
   Flammschutzmittel (Komponente D)):
      Phosphazen^{®} SPB 100, Fa. Otsuka Chemical Co., Japan
      Phosphazen^{®} Rabitle FP 110, Fushimi Pharmaceuticals, Japan
      Vergleich: MPP, Melaminpolyphosphat, Melapur^{®} 200/70, FA BASF AG, D
      Phosphonite (Komponente F)): Sandostab^{®} P-EPQ, Fa. Clariant GmbH, D
   Wachskomponenten (Komponente G)):
      Licowax^{®} E, Fa. Clariant Produkte (Deutschland) GmbH, D (Ester der Montanwachssäure)
2. Herstellung, Verarbeitung und Prüfung von flammhemmenden PolyamidFormmassen

Die Flammschutzmittelkomponenten wurden in dem in der Tabelle angegebenen Verhältnis mit dem Phosphonit, den Gleitmitteln und Stabilisatoren vermischt und über den Seiteneinzug eines Doppelschnecken-Extruders (Typ Leistritz ZSE 27/44D) bei Temperaturen von 260 bis 310 °C in PA 6.6 bzw. bei 250 - 275 °C in PA 6 eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 300 °C zu Prüfkörpern verarbeitet und anhand des UL 94-Tests (Underwriter Laboratories) auf Flammwidrigkeit geprüft und klassifiziert.

Nach UL 94 ergeben sich folgende Brandklassen:
- V-0:: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende.
- V-1:: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0.
- V-2:: Zündung der Watte durch brennendes Abtropfen, übrige Kriterien wie bei V-1.
Nicht klassifizierbar (nkl): erfüllt nicht die Brandklasse V-2.

Die Glühdrahtbeständigkeit wurde anhand der Glühdrahtprüfung GWFI (Glow-Wire Flammability-Index) nach IEC 60695-2-12 sowie an der Glühdrahtentzündlichkeitsprüfung GWIT (Glow-Wire-Ignition-Temperature) nach IEC 60695-2-13 bestimmt. Bei der GWFI-Prüfung wird an 3 Prüfkörpern (beispielsweise an Platten der Geometrie 60 X 60 X 1,5 mm) mit Hilfe eines glühenden Drahtes bei Temperaturen zwischen 550 und 960 °C die maximale Temperatur ermittelt, bei der eine Nachbrennzeit von 30 Sekunden nicht überschritten wird und die Probe nicht brennend abtropft. Bei der GWIT-Prüfung wird bei einer vergleichbaren Messprozedur die Glühdrahtentzündungstemperatur angegeben, die 25K (30K zwischen 900 °C und 960 °C) höher ist als die maximale Glühdrahttemperatur, die in 3 aufeinander folgenden Tests auch während der Einwirkzeit des Glühdrahtes nicht zur Entzündung führt. Als Entzündung gilt dabei eine Flamme mit einer Brennzeit von 5 Sekunden oder mehr.

Die Fließfähigkeit der Formmassen wurde durch Ermittlung des Schmelzvolumenindex (MVR) bei 275 °C/2,16 kg bestimmt. Höhere MVR Werte bedeuten bessere Fließfähigkeit im Spritzgussprozess. Ein starker Anstieg des MVR-Wertes kann allerdings auch auf einen Polymerabbau hindeuten.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Ergebnisse, in denen die Flammschutzmittel-Stabilisator-Mischung gemäß der Erfindung eingesetzt wurden, sind in den Beispielen B1-B3 aufgelistet. Alle Mengen sind als Gew.-% angegeben und beziehen sich auf die Kunststoff-Formmasse einschließlich der Flammschutzmittel, Additive und Verstärkungsstoffe.

**Tabelle 1: PA 66 GF 30 Versuchsergebnisse. V1-V4 sind Vergleichsbeispiele, B1 bis B2 erfindungsgemäße Polyamid Formmasse**

| | | V1 | V2 | V3 | V4 | B1 | B2 |
|---|---|---|---|---|---|---|---|
| A: Polyamid 66 | [Gew.-%] | 49,55 | 49,55 | 49,55 | 39,55 | 39,55 | 49,30 |
| A: Polyamid 6 | [Gew.-%] | | | | 10 | 10 | |
| E: Glasfasern HP3610 | [Gew.-%] | 30 | 30 | 30 | 30 | 30 | 30 |
| B: DEPAL | [Gew.-%] | 20 | 17 | 15 | 13 | 14 | 12 |
| C: PHOPAL | [Gew.-%] | | 3 | | | 3 | 3 |
| MPP | [Gew.-%] | | | | 7 | | |
| D: Phosphazen | [Gew.-%] | | | 5 | | 3 | 5 |
| G: Licowax E | [Gew.-%] | 0,25 | 0,25 | 0,25 | 0,25 | 0,25 | 0,25 |
| F: P-EPQ | [Gew.-%] | 0,20 | 0,20 | 0,20 | 0,20 | 0,20 | 0,20 |

| Messergebnisse | | | | | | | |
|---|---|---|---|---|---|---|---|
| UL 94 bei 0,4 mm Dicke | | V-1 | V-0 | V-1 | V-0 | V-0 | V-0 |
| GWFI | [°C] | 850 | 960 | 850 | 960 | 960 | 960 |
| MVR 275 °C/2,16 kg | | 4 | 5 | 18 | 13 | 13 | 12 |
| GWIT | [°C] | 700 | 725 | 725 | 750 | 800 | 800 |
| Ausblühungen* | | keine | keine | gering | deutlich | keine | keine |
| CTI | [Volt] | 600 | 600 | 550 | 550 | 600 | 600 |
| Schlagzähigkeit | [kJ/m²] | 60 | 63 | 73 | 60 | 60 | 74 |
| Kerbschlagzähigkeit | [kJ/m²] | 12 | 11 | 14 | 10 | 14 | 14 |

| | | | | | | | |
|---|---|---|---|---|---|---|---|
| * 14 Tage 100 % Feuchte 70 °C | | | | | | | |

Nur durch die erfindungsgemäße Kombination aus Polyamid, Glasfasern, DEPAL, PHOPAL und Phosphazen werden Polyamid Formmassen erhalten, die die Brandklasse UL 94 V-0 bei 0,4 mm erreichen und gleichzeitig ein GWIT größer als 775 °C und CTI 600 Volt, Schlagzähigkeit größer 65 kJ/m², Kerbschlagzähigkeit größer 10 kJ/m² aufweisen, und keine Verfärbungen und keine Ausblühungen zeigen. Durch die Verwendung von DEPAL ohne PHOPAL (V1) wird kein V-0 erreicht, durch die Kombination von DEPAL mit MPP (V4) wird zwar V-0 erreicht, die Polyamid-Formmasse zeigt aber Verfärbungen und Ausblühungen. Ein CTI von 600V wird ebenfalls nicht erreicht.

Die Kombination von DEPAL mit PHOPAL erreicht den GWIT > =775 °C nicht, die Kombination von DEPAL mit Phosphazen (V3) erfüllt UL 94 V-0 und GWIT 775 °C nicht.

**Tabelle 2: PA 6 GF 30 Versuchsergebnisse. V4-V6 sind Vergleichsbeispiele, B3 und B4 erfindungsgemäße Polyamid-Formmasse**

| | | V5 | V5 | V6 | B3 | B4 |
|---|---|---|---|---|---|---|
| A: Polyamid 6 | [Gew.-%] | 49,55 | 49,55 | 49,55 | 49,55 | 49,55 |
| E: Glasfasern HP3610 | [Gew.-%] | 30 | 30 | 30 | 30 | 30 |
| B: DEPAL | [Gew.-%] | 20 | 12 | 17 | 12 | 14 |
| C: PHOPAL | [Gew.-%] | | | 3 | 3 | 3 |
| MPP | [Gew.-%] | | 8 | | | |
| E: Phosphazen | [Gew.-%] | | | | 5 | 3 |
| G: Licowax E | [Gew.-%] | 0,25 | 0,25 | 0,25 | 0,25 | 0,25 |
| F: P-EPQ | [Gew.-%] | 0,20 | 0,20 | 0,20 | 0,20 | 0,20 |

| Messergebnisse | | | | | | |
|---|---|---|---|---|---|---|
| UL 94 bei 0,4 mm Dicke | | V-1 | V-0 | V-0 | V-0 | V-0 |
| GWIT | [°C] | 700 | 775 | 725 | 800 | 775 |
| MVR 250°C/2,16 kg | | 5 | 12 | 5 | 10 | 8 |
| Ausblühungen* | | keine | deutlich | keine | keine | keine |
| CTI | [Volt] | 600 | 550 | 600 | 600 | 600 |
| Schlagzähigkeit | [kJ/m²] | 61 | 59 | 63 | 69 | 63 |
| Kerbschlagzähigkeit | [kJ/m²] | 11 | 9,8 | 11 | 13 | 11 |

| | | | | | | |
|---|---|---|---|---|---|---|
| * 14 Tage 100 % Feuchte 70 °C | | | | | | |

Die Versuche in Polyamid 6 zeigen ein ähnliches Bild: nur die die erfindungsgemäße Kombination von Polyamid 6 mit Glasfasern, DEPAL, PHOPAL und Phosphazen werden Formmassen erhalten, die gleichzeitig UL 94 V-0 bei 0,4 mm, GWIT >= 775 °C, CTI 600V, keine Ausblühungen, gute Fließfähigkeit und gute mechanische Werte aufweisen.

## Patentansprüche

1. Flammhemmende Polyamidzusammensetzung, enthaltend als Komponente A) 1 bis 96 Gew.-% eines oder mehrere thermoplastische Polyamide, als Komponente B) 2 bis 25 Gew.-% eines Dialkylphosphinsäuresalzes der Formel (I) und/oder eines Diphosphinsäuresalzes der Formel (II) und/oder deren Polymere, 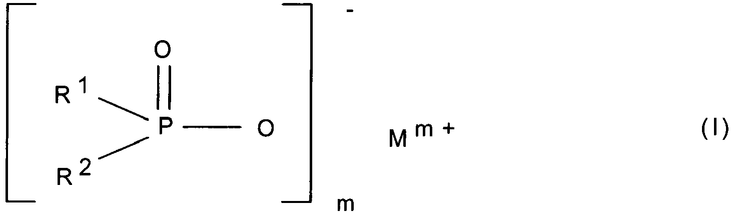 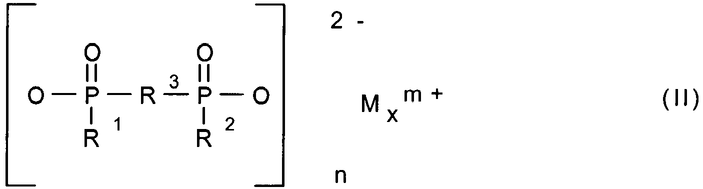 worin
R¹, R² gleich oder verschieden sind und C₁-C₆-Alkyl, linear oder verzweigt oder H,
R³ C₁-C₁₀-Alkylen, linear oder verzweigt, C₆-C₁₀-Arylen, C₇-C₂₀ -Alkylarylen oder C₇-C₂₀ -Arylalkylen;
M Mg, Ca, AI, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten, als Komponente C) 1 bis 20 Gew.-% eines Salzes der phosphorigen Säure als Komponente D) 1 bis 20 Gew.% eines Phosphazens der allgemeinen Formel 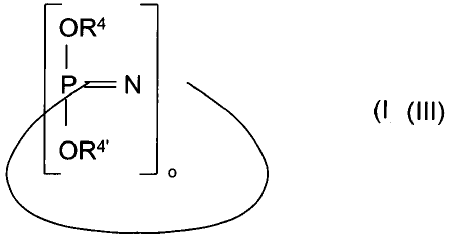 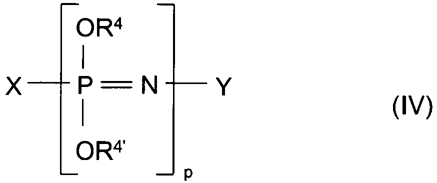 worin in Formel (III)
o eine ganze Zahl von 3 bis 25
und in Formel (IV)
p eine ganze Zahl von 3 bis 1000 bedeutet, und
X für ―N = P(OPh)₃ oder ―N = P(O)OPh und
Y für ―P(OPh)₄ oder ―P(O)(OPh)₂ steht,
R⁴ und R^{4'} gleich oder verschieden sind und für C₁-C₂₀-Alkyl, C₆-C₃₀-Aryl, C₆-C₃₀-Arylalkyl oder C₆-C₃₀-Alkyl substituiertes Aryl stehen
als Komponente E) 0 bis 50 Gew.-% Füll- oder Verstärkungsstoff,
als Komponente F) 0 bis 2 Gew.-% eines Phosphonits oder einer Mischung aus einem Phosphonit und einem Phosphit und
als Komponente G) 0 bis 2 Gew.-% eines Esters oder Salzes von langkettigen aliphatischen Carbonsäuren (Fettsäuren), die typischerweise Kettenlängen von C₁₄ bis C₄₀ aufweisen, wobei die Summe der Komponenten immer 100 Gew.-% beträgt.

2. Flammhemmende Polyamidzusammensetzung nach Anspruch 1, enthaltend
15 bis 89,9 Gew.-% Komponente A),
5 bis 20 Gew.-% Komponente B),
2 bis 10 Gew.-% Komponente C),
2 bis 10 Gew.-% Komponente D),
1 bis 50 Gew.-% Komponente E),
0 bis 2 Gew.-% Komponente F) und
0,1 bis 1 Gew.-% Komponente G).

3. Flammhemmende Polyamidzusammensetzung nach Anspruch 1 oder 2, enthaltend
15 bis 75,8 Gew.-% Komponente A),
5 bis 20 Gew.-% Komponente B),
2 bis 10 Gew.-% Komponente C),
2 bis 10 Gew.-% Komponente D),
15 bis 35 Gew.-% Komponente E),
0,1 bis 1 Gew.-% Komponente F) und
0,1 bis 1 Gew.% Komponente G).

4. Flammhemmende Polyamidzusammensetzung nach einem oder mehreren der Ansprüche 1 bis 3, enthaltend
35 bis 65,8 Gew.-% Komponente A),
5 bis 20 Gew.-% Komponente B),
2 bis 7 Gew.-% Komponente C),
2 bis 7 Gew.-% Komponente D),
25 bis 35 Gew.-% Komponente E),
0,1 bis 0,5 Gew.-% Komponente F) und
0,1 bis 0,5 Gew.% Komponente G).

5. Flammhemmende Polyamidzusammensetzung nach Anspruch 1, enthaltend
35 bis 96 Gew.-% Komponente A),
2 bis 25 Gew.-% Komponente B),
1 bis 20 Gew.-% Komponente C),
1 bis 20 Gew.-% Komponente D),
0 bis 50 Gew.-% Komponente E),
0 bis 2 Gew.-% Komponente F) und
0 bis 2 Gew.% Komponente G).

6. Flammhemmende Polyamidzusammensetzung nach einem oder mehreren der Ansprüche 1 bis 5, **dadurch gekennzeichnet, dass** sie einen Comparative Tracking Index (CTI) von größer als 500 Volt aufweist, gemessen nach der International Electrotechnical Commission Standard IEC-60112/3.

7. Flammhemmende Polyamidzusammensetzung nach einem oder mehreren der Ansprüche 1 bis 6, **dadurch gekennzeichnet, dass** sie eine Bewertung von V-0 nach UL-94 bei einer Dicke des Probenkörpers von 3,2 mm bis 0,4 mm erreicht.

8. Flammhemmende Polyamidzusammensetzung nach einem oder mehreren der Ansprüche 1 bis 7, **dadurch gekennzeichnet, dass** sie einen Glow Wire Flammability Index (GWFI) nach IEC-60695-2-12 von 850 °C oder mehr bei eine Dicke des Probenkörpers von 0,75 - 3 mm aufweist.

9. Flammhemmende Polyamidzusammensetzung nach einem oder mehreren der Ansprüche 1 bis 7, **dadurch gekennzeichnet, dass** sie einen Glow Wire Ignition Temperature Index (GWIT) nach IEC-60695-2-13 von 750 °C oder mehr bei einer Dicke des Probenkörpers von 0,75 - 3 mm aufweist.

10. Flammhemmende Polyamidzusammensetzung nach einem oder mehreren der Ansprüche 1 bis 9, **dadurch gekennzeichnet, dass** das Polyamid (PA) ausgewählt ist aus der Gruppe bestehend aus PA 6, PA 6,6, PA 4,6, PA 12, PA 6,10, PA 6T/66, PA 6T/6, PA 4T, PA 9T, PA 10T, Polyamid-Copolymere, Polyamid-Blends, sowie Kombinationen davon.

11. Flammhemmende Polyamidzusammensetzung nach einem oder mehreren der Ansprüche 1 bis 10, **dadurch gekennzeichnet, dass** es sich bei Komponente A) um Polyamid 66 oder Copolymere oder Polymer Blends aus Polyamid 66 und Polyamid 6 handelt.

12. Flammhemmende Polyamidzusammensetzung nach einem oder mehreren der Ansprüche 1 bis 11, **dadurch gekennzeichnet, dass** es sich bei den Phosphazenen um Phenoxyphosphazene handelt.

13. Flammhemmende Polyamidzusammensetzung nach einem oder mehreren der Ansprüche 1 bis 12, **dadurch gekennzeichnet, dass** bei der Komponente B) R¹, R² gleich oder verschieden sind und Methyl, Ethyl, n-Propyl, iso-Propyl, n-Butyl, tert.-Butyl und/oder n-Pentyl bedeuten.

14. Flammhemmende Polyamidzusammensetzung nach einem oder mehreren der Ansprüche 1 bis 13 , **dadurch gekennzeichnet, dass** bei der Komponente B) R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen bedeutet.

15. Flammhemmende Polyamidzusammensetzung nach einem oder mehreren der Ansprüche 1 bis 14, **dadurch gekennzeichnet, dass** das Salz der phosphorigen Säure (Komponente C)) der allgemeinen Formel (V)
[HP(=O)O₂]²⁻ M ^{m+} (V)
entspricht, worin
M Mg, Ca, Al, Sb, Sn, Ge, Ti, Zn, Fe, Zr, Ce, Bi, Sr, Mn, Li, Na und/oder K bedeutet.

16. Flammhemmende Polyamidzusammensetzung nach einem oder mehreren der Ansprüche 1 bis 14, **dadurch gekennzeichnet, dass** es sich bei dem Salz der phosphorigen Säure (Komponente C)) um Aluminiumphosphit Al(H₂PO₃)₃, sekundäres Aluminiumphosphit Al₂(HPO₃)₃, Aluminiumphosphittetrahydrat Al₂(HPO₃)₃*4aq, Aluminiumphosphonat, Basisches Aluminiumphosphit Al(OH)(H₂PO₃)₂*2aq, Al₇(HPO₃)₉(OH)₆(1,6-Hexandiamin)_{1,5}*12H₂O, Al₂(HPO₃)₃*xAl₂O₃*nH₂O mit × = 1 - 2,27 und n = 1 - 50 und/oder Al₄H₆P₁₆O₁₈ handelt.

17. Flammhemmende Polyamidzusammensetzung nach einem oder mehreren der Ansprüche 1 bis 14, **dadurch gekennzeichnet, dass** es sich bei dem Salz der phosphorigen Säure um Aluminiumphosphite der Formeln (VI), (VII) und/oder (VIII) handelt, wobei
Formel (VI): Al₂(HPO₃)₃ × (H₂O)q
umfasst und
q 0 bis 4 bedeutet;
Formel (VII) Al_{2,00}M_{z}(HPO₃)_{y}(OH)ᵥ × (H₂O)_{w}
umfasst und
M Alkalimetallionen,
z 0,01 bis 1,5,
y 2,63 bis 3,5,
v 0 bis 2 und
w 0 bis 4 bedeutet;
Formel (VIII) Al_{2,00}(HPO₃)ᵤ(H₂PO₃)ₜ × (H₂O)ₛ
umfasst und
u 2 bis 2,99 und
t 2 bis 0,01 und
s 0 bis 4 bedeutet,
oder das Aluminiumphosphit Mischungen von Aluminiumphosphit der Formel (VI) mit schwerlöslichen Aluminiumsalzen und stickstofffreien Fremdionen, Mischungen von Aluminiumphosphit der Formel (VIII) mit Aluminiumsalzen, um Mischungen von Aluminiumphosphiten der Formeln (VI) bis (VIII) mit Aluminiumphosphit [Al(H₂PO₃)₃], mit sekundäres Aluminiumphosphit [Al₂(HPO₃)₃], mit basischem Aluminiumphosphit [Al(OH)(H₂PO₃)₂*2aq], mit Aluminiumphosphittetrahydrat [Al₂(HPO₃)₃*4aq], mit Aluminiumphosphonat, mit Al₇(HPO₃)₉(OH)₆(1,6-Hexandiamin)_{1,5}*12H₂O, mit Al₂(HPO₃)₃*xAl₂O₃*nH₂O mit × = 1 - 2,27 und n = 1 - 50 und/oder mit Al₄H₆P₁₆O₁₈ umfasst.

18. Flammhemmende Polyamidzusammensetzung nach einem oder mehreren der Ansprüche 1 bis 17, **dadurch gekennzeichnet, dass** die Komponente C) eine mittlere Teilchengröße von 0,2 bis 100 µm aufweist.

19. Flammhemmende Polyamidzusammensetzung nach einem oder mehreren der Ansprüche 1 bis 18, **dadurch gekennzeichnet, dass** es sich bei dem verstärkenden Füll- oder Verstärkungsstoff (Komponente E)) um Glasfasern handelt.

20. Flammhemmende Polyamidzusammensetzung nach einem oder mehreren der Ansprüche 1 bis 19 , **dadurch gekennzeichnet, dass** es sich bei den
Phosphoniten (Komponente F)) um solche der allgemeinen Struktur
R-[P(OR⁵)₂]ₘ (IX)
handelt, wobei
R ein ein- oder mehrwertiger aliphatischer, aromatischer oder heteroaromatischer organischer Rest ist und
R⁵ eine Verbindung der Struktur (X) 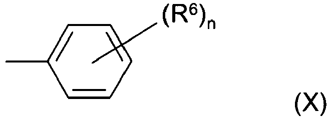
ist oder die beiden Reste R⁵ eine verbrückende Gruppe der Struktur (XI) bilden 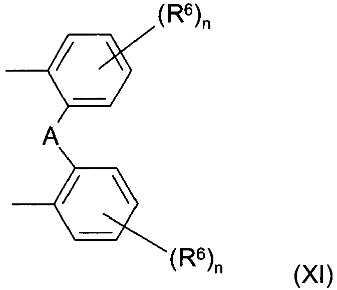 mit
A direkter Bindung, O, S, C₁₋₁₈-Alkylen (linear oder verzweigt), C₁₋₁₈-Alkyliden (linear oder verzweigt), in denen
R⁶ unabhängig voneinander C₁₋₁₂-Alkyl (linear oder verzweigt), C₁₋₁₂-Alkoxy und/oder C₅₋₁₂-Cycloalkyl bedeuten und
n 0 bis 5 sowie
m 1 bis 4 bedeutet.

21. Flammhemmende Polyamidzusammensetzung nach einem oder mehreren der Ansprüche 1 bis 20, **dadurch gekennzeichnet, dass** es sich bei der Komponente G) um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit handelt

22. Ein dreidimensionaler Artikel umfassend die Zusammensetzung nach einem oder mehreren der Ansprüche 1 bis 21, **dadurch gekennzeichnet, dass** es sich hierbei Formkörper, Spritzgussteile, Extrusionsmassen und Extrusionsteile handelt.

23. Verwendung einer flammhemmenden Polyamidzusammensetzung nach einem oder mehreren der Ansprüche 1 bis 21 in oder für Steckverbinder, stromberührten Teilen in Stromverteilern (FI-Schütz), Platinen, Vergussmassen, Stromsteckern, Schutzschaltern, Lampengehäuse (LED Gehäuse), Kondensatorgehäuse, Spulenkörper und Ventilatoren für Schutzkontakte, Stecker, in/auf Platinen, Gehäuse für Stecker, Kabel, flexible Leiterplatten, Ladekabel für Handys, Motorabdeckungen, Textilbeschichtungen und anderen Produkten.

## Claims

1. Flame-retardant polyamide composition comprising
as component A) 1 to 96 wt% of one or more thermoplastic polyamides,
as component B) 2 to 25 wt% of a dialkylphosphinic salt of the formula (I), and/or of a diphosphinic salt of the formula (II), and/or of polymers thereof, 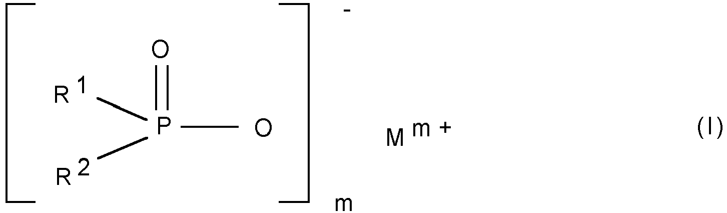 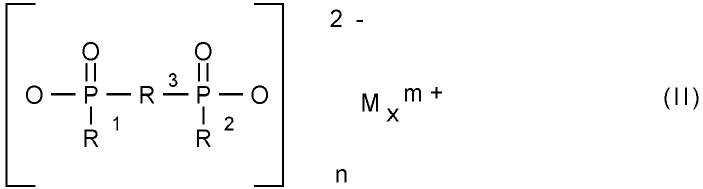
in which
R¹ and R² are identical or different and are C₁-C₆-alkyl, linear, or branched, or H;
R³ is C₁-C₁₀-alkylene, linear, or branched, C₆-C₁₀-arylene, C₇-C₂₀-alkylarylene, or C₇-C₂₀-arylalkylene;
M is Mg, Ca, Al, Sb, Sn, Ge, Ti, Zn, Fe, Zr, Ce, Bi, Sr, Mn, Li, Na, K and/or a protonated nitrogen base;
m is 1 to 4;
n is 1 to 4;
x is 1 to 4,
as component C) 1 to 20 wt% of a salt of phosphorous acid,
as component D) 1 to 20 wt% of a phosphazene of the general formula 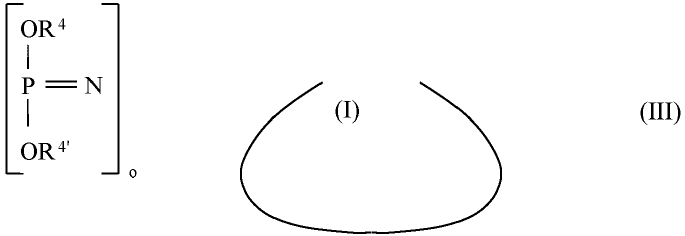 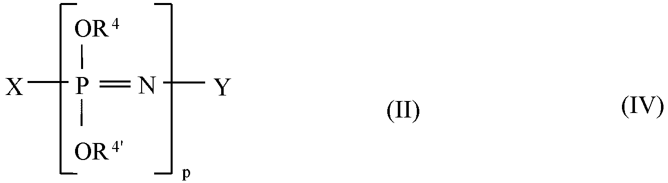
in which in formula (III)
o is an integer from 3 to 25 and in formula (IV)
p is an integer from 3 to 1000, and
X is -N = P(OPh)₃ or -N = P(O)OPh and
Y is -P(OPh)₄ or -P(O)(OPh)₂,
R⁴ and R^{4'} are identical or different and are C₁-C₂₀-alkyl, C₆-C₃₀-aryl, C₆-C₃₀-arylalkyl, or C₆-C₃₀-alkyl-substituted aryl,
as component E) 0 to 50 wt% of filler or reinforcing agent,
as component F) 0 to 2 wt% of a phosphonite or of a mixture of a phosphonite and a phosphite, and
as component G) 0 to 2 wt% of an ester or salt of long-chain aliphatic carboxylic acids (fatty acids), which typically have chain lengths of C₁₄ to C₄₀, the sum of the components always being 100 wt%.

2. Flame-retardant polyamide composition according to Claim 1, comprising 15 to 89.9 wt% of component A),
5 to 20 wt% of component B),
2 to 10 wt% of component C),
2 to 10 wt% of component D),
1 to 50 wt% of component E),
0 to 2 wt% of component F), and
0.1 to 1 wt% of component G).

3. Flame-retardant polyamide composition according to Claim 1 or 2, comprising
15 to 75.8 wt% of component A),
5 to 20 wt% of component B),
2 to 10 wt% of component C),
2 to 10 wt% of component D),
15 to 35 wt% of component E),
0.1 to 1 wt% of component F), and
0.1 to 1 wt% of component G).

4. Flame-retardant polyamide composition according to one or more of Claims 1 to 3, comprising
35 to 65.8 wt% of component A),
5 to 20 wt% of component B),
2 to 7 wt% of component C),
2 to 7 wt% of component D),
25 to 35 wt% of component E),
0.1 to 0.5 wt% of component F), and
0.1 to 0.5 wt% of component G).

5. Flame-retardant polyamide composition according to Claim 1, comprising 35 to 96 wt% of component A),
2 to 25 wt% of component B),
1 to 20 wt% of component C),
1 to 20 wt% of component D),
0 to 50 wt% of component E),
0 to 2 wt% of component F), and
0 to 2 wt% of component G).

6. Flame-retardant polyamide composition according to one or more of Claims 1 to 5, **characterized in that** it has a Comparative Tracking Index (CTI) of greater than 500 volts as measured to International Electrotechnical Commission Standard IEC-60112/3.

7. Flame-retardant polyamide composition according to one or more of Claims 1 to 6, **characterized in that** it achieves a rating of V-0 to UL-94 for a specimen thickness of 3.2 mm to 0.4 mm.

8. Flame-retardant polyamide composition according to one or more of Claims 1 to 7, **characterized in that** it has a Glow Wire Flammability Index (GWFI) to IEC-60695-2-12 of 850°C or more for a specimen thickness of 0.75-3 mm.

9. Flame-retardant polyamide composition according to one or more of Claims 1 to 7, **characterized in that** it has a Glow Wire Ignition Temperature Index (GWIT) to IEC-60695-2-13 of 750°C or more for a specimen thickness of 0.75-3 mm.

10. Flame-retardant polyamide composition according to one or more of Claims 1 to 9, **characterized in that** the polyamide (PA) is selected from the group consisting of PA 6, PA 6.6, PA 4.6, PA 12, PA 6.10, PA 6T/66, PA 6T/6, PA 4T, PA 9T, PA 10T, polyamide copolymers, polyamide blends, and combinations thereof.

11. Flame-retardant polyamide composition according to one or more of Claims 1 to 10, **characterized in that** component A) comprises polyamide 66 or copolymers or polymer blends of polyamide 66 and polyamide 6.

12. Flame-retardant polyamide composition according to one or more of Claims 1 to 11, **characterized in that** the phosphazenes comprise phenoxyphosphazenes.

13. Flame-retardant polyamide composition according to one or more of Claims 1 to 12, **characterized in that** R¹ and R² in component B) are identical or different and are methyl, ethyl, n-propyl, isopropyl, n-butyl, tert-butyl and/or n-pentyl.

14. Flame-retardant polyamide composition according to one or more of Claims 1 to 13, **characterized in that** R³ in component B) is methylene, ethylene, n-propylene, isopropylene, n-butylene, tert-butylene, n-pentylene, n-octylene, or n-dodecylene; phenylene, or naphthylene; methylphenylene, ethylphenylene, tert-butylphenylene, methyl-naphthylene, ethyl-naphthylene, or tert-butylnaphthylene; phenylmethylene, phenylethylene, phenylpropylene, or phenylbutylene.

15. Flame-retardant polyamide composition according to one or more of Claims 1 to 14, **characterized in that** the salt of phosphorous acid (component C)) conforms to the general formula (V)
[HP(=O)O₂]²⁻ M ^{m+} (V)
in which
M is Mg, Ca, Al, Sb, Sn, Ge, Ti, Zn, Fe, Zr, Ce, Bi, Sr, Mn, Li, Na and/or K.

16. Flame-retardant polyamide composition according to one or more of Claims 1 to 14, **characterized in that** the salt of phosphorous acid (component C)) comprises aluminum phosphite Al(H₂PO₃)₃, secondary aluminum phosphite Al₂(HPO₃)₃, aluminum phosphite tetrahydrate Al₂(HPO₃)₃^{∗}4aq, aluminum phosphonate, basic aluminum phosphite Al(OH)(H₂PO₃)₂^{∗}2aq, Al₇(HPO₃)₉(OH)₆(1,6-hexanediamine)_{1.5}^{∗}12H₂O, Al₂(HPO₃)₃*xAl₂O₃*nH₂O with × = 1-2.27 and n = 1-50, and/or Al₄H₆P₁₆O₁₈.

17. Flame-retardant polyamide composition according to one or more of Claims 1 to 14, **characterized in that** the salt of phosphorous acid comprises aluminum phosphites of the formulae (VI), (VII), and/or (VIII), where
formula (VI) comprises Al₂(HPO₃)₃ × (H₂O)q
and
q is 0 to 4;
formula (VII) comprises Al_{2.00}M_{z}(HPO₃)_{y}(OH)ᵥ × (H₂O)_{w}
and
M are alkali metal ions,
z is 0.01 to 1.5,
y is 2.63 to 3.5,
v is 0 to 2, and
w is 0 to 4;
formula (VIII) comprises Al_{2.00}(HPO₃)ᵤ(H₂PO₃)ₜ × (H₂O)ₛ
and
u is 2 to 2.99 and
t is 2 to 0.01, and
s is 0 to 4,
or the aluminum phosphite comprises mixtures of aluminum phosphite of the formula (VI) with sparingly soluble aluminum salts and nitrogen-free foreign ions, mixtures of aluminum phosphite of the formula (VIII) with aluminum salts, mixtures of aluminum phosphites of the formulae (VI) to (VIII) with aluminum phosphite [Al(H₂PO₃)₃], with secondary aluminum phosphite [Al₂(HPO₃)₃], with basic aluminum phosphite [Al(OH)(H₂PO₃)₂^{∗}2aq], with aluminum phosphite tetrahydrate [Al₂(HPO₃)₃^{∗}4aq], with aluminum phosphonate, with Al₇(HPO₃)₉(OH)₆(1,6-hexanediamine)_{1.5}^{∗}12H₂O, with Al₂(HPO₃)₃^{∗}xAl₂O₃^{∗}nH₂O with × = 1-2.27 and n = 1-50, and/or with Al₄H₆P₁₆O₁₈.

18. Flame-retardant polyamide composition according to one or more of Claims 1 to 17, **characterized in that** component C) has an average particle size of 0.2 to 100 µm.

19. Flame-retardant polyamide composition according to one or more of Claims 1 to 18, **characterized in that** the reinforcing filler or reinforcing agent (component E)) comprises glass fibers.

20. Flame-retardant polyamide composition according to one or more of Claims 1 to 19, **characterized in that** the phosphonites (component F)) are of the general structure
R-[P(OR⁵)₂]ₘ (IX)
where
R is a mono- or polyvalent aliphatic, aromatic, or heteroaromatic organic radical and
R⁵ is a compound of the structure (X) 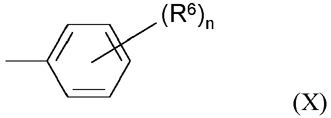
or the two radicals R⁵ form a bridging group of the structure (XI) 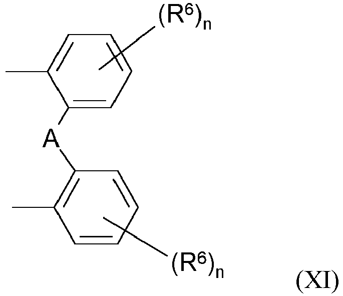 where
A is a direct bond, O, S, C₁₋₁₈-alkylene (linear, or branched) or C₁₋₁₈-alkylidene (linear, or branched), in which
R⁶ independently at each occurrence is C₁₋₁₂-alkyl (linear, or branched), C₁₋₁₂-alkoxy and/or C₅₋₁₂-Cycloalkyl, and
n is 0 to 5 and
m is 1 to 4.

21. Flame-retardant polyamide composition according to one or more of Claims 1 to 20, **characterized in that** component G) comprises alkali metal, alkaline earth metal, aluminum and/or zinc salts of long-chain fatty acids having 14 to 40 carbon atoms and/or comprises reaction products of long-chain fatty acids having 14 to 40 carbon atoms with polyhydric alcohols, such as ethylene glycol, glycerol, trimethylolpropane and/or pentaerythritol.

22. Three-dimensional article comprising the composition according to one or more of Claims 1 to 21, **characterized in that** it comprises moldings, injection-molded parts, extrusion compounds, and extruded parts.

23. Use of a flame-retardant polyamide composition according to one or more of Claims 1 to 21 in or for plug connectors, current-contacted components in power distributors (differential-current protection), circuit boards, encapsulating compounds, power plugs, circuit breakers, lamp housings (LED housings), capacitor housings, coil elements and ventilators for grounding contacts, plugs, in/on circuit boards, housings for plugs, cables, flexible printed circuit boards, charging cables for cell phones, engine covers, textile coatings, and other products.

## Revendications

1. Composition ignifuge de polyamide, contenant comme composant A) 1 à 96% en poids d'un ou de plusieurs polyamides thermoplastiques, comme composant B) 2 à 25% en poids d'un sel d'acide dialkylphosphinique de formule (I) et/ou d'un sel d'acide diphosphinique de formule (II) et/ou de leurs polymères, 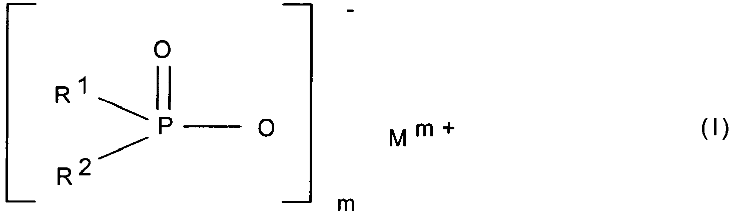 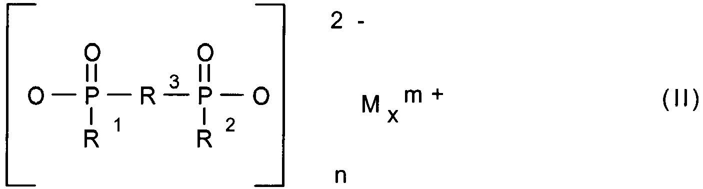 dans lesquelles
R¹, R² sont identiques ou différents et signifient C₁-C₆-alkyle, linéaire ou ramifié et/ou H,
R³ signifie C₁-C₁₀-alkylène, linéaire ou ramifié, C₆-C₁₀-arylène, C₇-C₂₀)-alkylarylène ou C₇-C₂₀-arylalkylène ;
M signifie Mg, Ca, Al, Sb, Sn, Ge, Ti, Zn, Fe, Zr, Ce, Bi, Sr, Mn, Li, Na, K et/ou une base azotée protonée ;
m vaut 1 à 4 ;
n vaut 1 à 4 ;
x vaut 1 à 4
comme composant C) 1 à 20% en poids d'un sel de l'acide phosphoreux
comme composant D) 1 à 20% en poids d'un phosphazène de formule générale 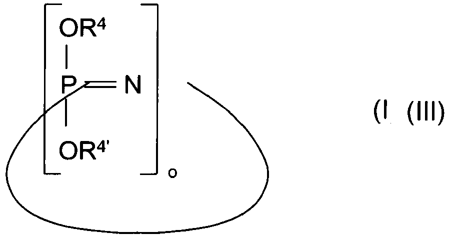 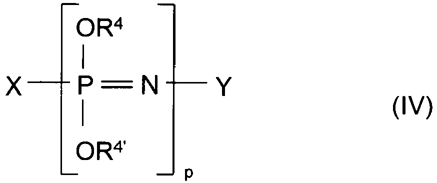
où, dans la formule (III)
o représente un nombre entier de 3 à 25,
et, dans la formule (IV),
p signifie un nombre entier de 3 à 1000 et
X représente ―N=P(OPh)₃ ou ―N=P(O)OPh et
Y représente ―P(OPh)₄ ou ―P(O)(OPh)₂,
R⁴ et R^{4'} sont identiques ou différents et représentent C₁-C₂₀-alkyle, C₆-C₃₀-aryle, C₆-C₃₀-arylalkyle ou aryle substitué par C₆-C₃₀-alkyle
comme composant E) 0 à 50% en poids de charge ou de substance de renforcement,
comme composant F) 0 à 2% en poids d'un phosphinite ou d'un mélange d'un phosphonite et d'un phosphite et comme composant G) 0 à 2% en poids d'un ester ou d'un sel d'acides carboxyliques aliphatiques à longue chaîne (acides gras), qui présentent habituellement des longueurs de chaîne de C₁₄ à C₄₀, la somme des composants valant toujours 100% en poids.

2. Composition ignifuge de polyamide selon la revendication 1, contenant
- 15 à 89,9% en poids de composant A),
- 5 à 20% en poids de composant B),
- 2 à 10% en poids de composant C),
- 2 à 10% en poids de composant D),
- 1 à 50% en poids de composant E),
- 0 à 2% en poids de composant F) et
- 0,1 à 1% en poids de composant G).

3. Composition ignifuge de polyamide selon la revendication 1 ou 2, contenant
- 15 à 75,8% en poids de composant A),
- 5 à 20% en poids de composant B),
- 2 à 10% en poids de composant C),
- 2 à 10% en poids de composant D),
- 15 à 35% en poids de composant E),
- 0,1 à 1% en poids de composant F) et
- 0,1 à 1% en poids de composant G).

4. Composition ignifuge de polyamide selon l'une ou plusieurs des revendications 1 à 3, contenant
- 35 à 65,8% en poids de composant A),
- 5 à 20% en poids de composant B),
- 2 à 7% en poids de composant C),
- 2 à 7% en poids de composant D),
- 25 à 35% en poids de composant E),
- 0,1 à 0,5% en poids de composant F) et
- 0,1 à 0,5% en poids de composant G).

5. Composition ignifuge de polyamide selon la revendication 1, contenant
- 35 à 96% en poids de composant A),
- 2 à 25% en poids de composant B),
- 1 à 20% en poids de composant C),
- 1 à 20% en poids de composant D),
- 0 à 50% en poids de composant E),
- 0 à 2% en poids de composant F) et
- 0 à 2% en poids de composant G).

6. Composition ignifuge de polyamide selon l'une ou plusieurs des revendications 1 à 5, **caractérisée en ce qu'**elle présente un indice de suivi comparatif (Comparative Tracking Index - CTI) supérieur à 500 volts, mesuré selon la norme de la commission électrotechnique internationale (International Electrotechnical Commission Standard) IEC-60112/3.

7. Composition ignifuge de polyamide selon l'une ou plusieurs des revendications 1 à 6, **caractérisée en ce qu'**elle obtient une évaluation de V-0 selon UL-94 à une épaisseur de l'éprouvette de 3,2 mm à 0,4 mm.

8. Composition ignifuge de polyamide selon l'une ou plusieurs des revendications 1 à 7, **caractérisée en ce qu'**elle présente un indice d'inflammabilité au fil incandescent (Glow Wire Flammability Index - GWFI) selon la norme IEC-60695-2-12 de 850°C ou plus à une épaisseur de l'éprouvette de 0,75-3 mm.

9. Composition ignifuge de polyamide selon l'une ou plusieurs des revendications 1 à 7, **caractérisée en ce qu'**elle présente une température d'ignition au fil incandescent (Glow Wire Ignition Temperature - GWIT) selon la norme IEC-60695-2-13 de 750°C ou plus à une épaisseur de l'éprouvette de 0,75-3 mm.

10. Composition ignifuge de polyamide selon l'une ou plusieurs des revendications 1 à 9, **caractérisée en ce que** le polyamide (PA) est choisi dans le groupe constitué par le PA 6, le PA 6,6, le PA 4,6, le PA 12, le PA 6, 10, le PA 6T/66, le PA 6T/6, le PA 4T, le PA 9T, le PA 10T, les copolymères de polyamide, les mélanges de polyamides ainsi que leurs combinaisons.

11. Composition ignifuge de polyamide selon l'une ou plusieurs des revendications 1 à 10, **caractérisée en ce qu'**il s'agit, pour le composant A), de polyamide 66 ou de copolymères ou de mélanges polymères de polyamide 66 et de polyamide 6.

12. Composition ignifuge de polyamide selon l'une ou plusieurs des revendications 1 à 11, **caractérisée en ce qu'**il s'agit, pour les phosphazènes, de phénoxyphosphazènes.

13. Composition ignifuge de polyamide selon l'une ou plusieurs des revendications 1 à 12, **caractérisée en ce que**, dans le composant B), R¹ et R² sont identiques ou différents et signifient méthyle, éthyle, n-propyle, iso-propyle, n-butyle, tert-butyle et/ou n-pentyle.

14. Composition ignifuge de polyamide selon l'une ou plusieurs des revendications 1 à 13, **caractérisée en ce que**, dans le composant B), R³ signifie méthylène, éthylène, n-propylène, isopropylène, n-butylène, tert-butylène, n-pentylène, n-octylène ou n-dodécylène ; phénylène ou naphtylène ; méthylphénylène, éthylphénylène, tert-butylphénylène, méthylnaphtylène, éthylnaphtylène ou tert-butylnaphtylène ; phénylméthylène, phényléthylène, phénylpropylène ou phénylbutylène.

15. Composition ignifuge de polyamide selon l'une ou plusieurs des revendications 1 à 14, **caractérisée en ce que** le sel de l'acide phosphoreux (composant C)) correspond à la formule générale (V)
[HP(=O)O₂]²⁻ M^{m+} (V)
dans laquelle
M signifie Mg, Ca, Al, Sb, Sn, Ge, Ti, Zn, Fe, Zr, Ce, Bi, Sr, Mn, Li, Na et/ou K.

16. Composition ignifuge de polyamide selon l'une ou plusieurs des revendications 1 à 14, **caractérisée en ce qu'**il s'agit, pour le sel de l'acide phosphoreux (composant C)), de phosphite d'aluminium Al(H₂PO₃)₃, de phosphite d'aluminium secondaire Al₂(HPO₃)₃, de phosphite d'aluminium tétrahydraté Al₂(HPO₃)₃*4aq, de phosphonate d'aluminium, de phosphite d'aluminium basique Al(OH)(H₂PO₃)₂*2aq, d'Al₇(HPO₃)₉(OH)₆(1,6-hexanediamine)₁,₅*12H₂O, d'Al₂(HPO₃)₃*xAl₂O₃*nH₂O avec x = 1-2,27 et n = 1-50 et/ou d'Al₄H₆P₁₆O₁₈.

17. Composition ignifuge de polyamide selon l'une ou plusieurs des revendications 1 à 14, **caractérisée en ce qu'**il s'agit, pour le sel de l'acide phosphoreux, de phosphites d'aluminium des formules (VI), (VII) et/ou (VIII), où
Formule (VI) = Al₂(HPO₃)₃x(H₂O)_{q}
et
q signifie 0 à 4 ;
Formule (VII) = Al₂,₀₀M_{z}(HPO₃)_{y}(OH)ᵥx(H₂O)_{w}
et
M signifie des ions de métal alcalin
z vaut 0,01 à 1,5,
y vaut 2,63 à 3,5,
v vaut 0 à 2 et
w vaut 0 à 4 ;
Formule (VIII) = Al_{2,00}(HPO₃)ᵤ(H₂PO₃)ₜx(H₂O)ₛ
et
u vaut 2 à 2,99 et
t vaut 2 à 0,01 et
s Vaut 0 à 4,
ou le phosphite d'aluminium comprend des mélanges de phosphite d'aluminium de formule (VI) avec des sels d'aluminium peu solubles et des ions étrangers exempts d'azote, des mélanges de phosphite d'aluminium de formule (VIII) avec des sels d'aluminium, des mélanges de phosphites d'aluminium des formules (VI) à (VIII) avec du phosphite d'aluminium [Al(H₂PO₃)₃], avec du phosphite d'aluminium secondaire [Al₂(HPO₃)₃], avec du phosphite d'aluminium basique [Al(OH)(H₂PO₃)₂*2aq], avec du phosphite d'aluminium tétrahydraté [Al₂(HPO₃)₃*4aq], avec du phosphonate d'aluminium, avec Al₇(HPO₃)₉(OH)₆(1,6-hexanediamine)₁,₅*12H₂O, avec Al₂(HPO₃)₃*xAl₂O₃*nH₂O avec x = 1-2,27 et n = 1-50 et/ou avec Al₄H₆P₁₆O₁₈.

18. Composition ignifuge de polyamide selon l'une ou plusieurs des revendications 1 à 17, **caractérisée en ce que** le composant C) présente une grosseur moyenne de particule de 0,2 à 100 µm.

19. Composition ignifuge de polyamide selon l'une ou plusieurs des revendications 1 à 18, **caractérisée en ce qu'**il s'agit, pour la charge de renforcement ou la substance de renforcement (composant E)), de fibres de verre.

20. Composition ignifuge de polyamide selon l'une ou plusieurs des revendications 1 à 19, **caractérisée en ce qu'**il s'agit, pour les phosphonites (composant F)), de ceux de structure générale
R-[P(OR⁵)₂]m (IX)
où
R représente un radical organique monovalent ou polyvalent, aliphatique, aromatique ou hétéroaromatique et
R⁵ représente un composé de structure (X) 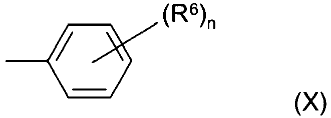
ou les deux radicaux R⁵ forment un groupe pontant de structure (XI) 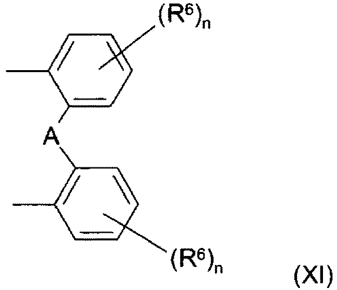 dans laquelle
A représente une liaison directe, O, S, C₁₋₁₈-alkylène (linéaire ou ramifié), C₁₋₁₈-alkylidène (linéaire ou ramifié),
les radicaux R⁶ représentent, indépendamment l'un de l'autre, C₁₋₁₂-alkyle (linéaire ou ramifié), C₁₋₁₂-alcoxy et/ou C₅₋₁₂-cycloalkyle et
n vaut 0 à 5, ainsi que
m vaut 1 à 4.

21. Composition ignifuge de polyamide selon l'une ou plusieurs des revendications 1 à 20, **caractérisée en ce qu'**il s'agit, pour le composant G), de sels de métal alcalin, alcalino-terreux, d'aluminium et/ou de zinc d'acides gras à longue chaîne comprenant 14 à 40 atomes de carbone et/ou de produits de transformation d'acides gras à longue chaîne comprenant 14 à 40 atomes de carbone avec des alcools polyvalents, tels que l'éthylèneglycol, le glycérol, le triméthylolpropane et/ou le pentaérythritol.

22. Article tridimensionnel comprenant la composition selon l'une ou plusieurs des revendications 1 à 21, **caractérisée en ce qu'**il s'agit de corps moulés, de corps moulés par injection, de masses extrudées et de pièces extrudées.

23. Utilisation d'une composition ignifuge de polyamide selon l'une ou plusieurs des revendications 1 à 21 dans ou pour des connecteurs, des pièces en contact avec le courant dans des distributeurs de courant (protection par disjoncteur à courant de défaut), des cartes, des masses de scellement, des prises, des disjoncteurs, des boîtiers de lampe (boîtier de DEL), des boîtiers de condensateur, des corps de bobine et des ventilateurs pour des contacts de protection, des prises, dans et sur des platines, des boîtiers pour des prises, des câbles, des circuits imprimés souples, des câbles de charge pour portables, des capots de moteur, des revêtements textiles et d'autres produits.
